# EUROPEAN PATENT APPLICATION

(11) **EP 4 811 888 A1**
(43) Date of publication of application: **23.09.2026**
(21) Application number: 24924927.7
(22) Date of filing: 31.12.2024
(51) Int. Cl.: H04W 52/36, H04W 52/24, H04W 52/32, H04W 52/14, H04W 72/231, H04W 72/232

(54) **METHOD AND APPARATUS FOR POWER CONTROL BASED ON PATH LOSS COMPENSATION IN ASYMMETRIC TRP SYSTEM**

(30) Priority: 16.02.2024 KR 20240022982
(71) Applicant: Hyundai Motor Company, Seoul 06797 (KR); Kia Corporation, Seoul 06797 (KR)
(72) Inventor: LEE, Jeong Su, Hwaseong-si, Gyeonggi-do 18280 (KR); HONG, Ui Hyun, Hwaseong-si, Gyeonggi-do 18280 (KR); SUH, Young Kil, Hwaseong-si, Gyeonggi-do 18280 (KR); HAHN, Gene Back, Hwaseong-si, Gyeonggi-do 18280 (KR)
(74) Representative: Isarpatent
(86) International application number: PCT/KR2024/021533
(87) International publication number: WO 2025/173903

(57) **Abstract**

Disclosed are a method and an apparatus for power control based on path loss compensation in an asymmetric TRP system. The method of a user equipment (UE) comprises the steps of: performing downlink (DL) communication with a first transmission and reception point (TRP); determining a first uplink (UL) transmission power for a first UL communication with the first TRP on the basis of a state of a DL channel between the UE and the first TRP; performing the first UL communication with the first TRP by using the first UL transmission power; determining a second UL transmission power for a second UL communication with a second TRP on the basis of the state of the DL channel between the UE and the first TRP and a power offset; and performing the second UL communication with the second TRP by using the second UL transmission power.

## Description

### [Technical Field]

The present disclosure relates to an improved communication technique, and more particularly, to a power control technique based on path loss compensation in a communication system supporting asymmetric transmission and reception points (TRPs).

### [Background Art]

A communication network (e.g., 5G communication network or 6G communication network) is being developed to provide enhanced communication services compared to the existing communication networks (e.g., long term evolution (LTE), LTE-Advanced (LTE-A), etc.). The 5G communication network (e.g., New Radio (NR) communication network) can support frequency bands both below 6GHz and above 6GHz. In other words, the 5G communication network can support both a frequency region 1 (FR1) and/or FR2 bands. Compared to the LTE communication network, the 5G communication network can support various communication services and scenarios. For example, usage scenarios of the 5G communication network may include enhanced Mobile BroadBand (eMBB), Ultra Reliable Low Latency Communication (URLLC), massive Machine Type Communication (mMTC), and the like.

The 6G communication network can support a variety of communication services and scenarios compared to the 5G communication network. The 6G communication network can meet the requirements of hyper-performance, hyper-bandwidth, hyper-space, hyper-precision, hyper-intelligence, and/or hyper-reliability. The 6G communication network can support diverse and wide frequency bands and can be applied to various usage scenarios such as terrestrial communication, non-terrestrial communication, sidelink communication, and the like.

Meanwhile, multiple transmission and reception points (mTRP) may be introduced into a communication network (e.g., 5G communication network and/or 6G communication network). The mTRP may be geographically separated. A base station may perform communication with a terminal using the mTRP. mTRP technology may be used to solve a quality of service (QoS) degradation problem of a cell-edge terminal and/or an inter-cell interference problem. In an environment where a non-line-of-sight (NLOS) path is limited, the mTRP technology may be used to provide an additional communication path.

mTRP-based communication may be performed based on a coherent joint transmission (CJT) scheme or a non-CJT (NCJT) scheme. In the CJT scheme, the mTRP may perform cooperative communication based on a stable backhaul link, and the mTRP may provide synchronized communication services to the terminal. In the NCJT scheme, the mTRP may provide communication services to the terminal without cooperation. For example, in the NCJT scheme, the mTRP may perform operations such as scheduling operations, precoding matrix selection operations, and modulation and coding scheme (MCS) determination operations without cooperation.

In an asymmetric TRP system, a terminal may perform downlink (DL) communication with a single TRP (sTRP), and the terminal may perform uplink (UL) communication with multiple TRPs (mTRP). In this case, when UL communication with mTRP is performed using the same transmission power, power consumption of the terminal may increase, and interference caused by the UL communication may increase. Accordingly, methods for determining transmission power for addressing the above problem are required.

### [Disclosure]

### [Technical Problem]

The present disclosure is directed to providing a method and an apparatus for performing power control based on path loss compensation in a communication system supporting asymmetric TRPs.

### [Technical Solution]

A method of a user equipment (UE), according to exemplary embodiments of the present disclosure for achieving the above-described objective, may comprise: performing downlink (DL) communication with a first transmission and reception point (TRP); determining a first uplink (UL) transmission power for first UL communication with the first TRP based on a channel state of a DL channel between the UE and the first TRP; performing the first UL communication with the first TRP using the first UL transmission power; determining a second UL transmission power for second UL communication with a second TRP based on a power offset and the channel state of the DL channel between the UE and the first TRP; and performing the second UL communication with the second TRP using the second UL transmission power.

The determining of the second UL transmission power may comprise: measuring a quality of the DL channel based on a reference signal received through the DL channel; identifying a quality range to which the measured quality belongs; and identifying the power offset mapped to the quality range.

The method may further comprise: receiving mapping information between one or more quality ranges and one or more power offsets, wherein the quality range and the power offset may be identified based on the mapping information.

The mapping information may be received through radio resource control (RRC) signaling from the first TRP.

The measured quality may be a reference signal received power (RSRP), and the quality range may be an RSRP range or an RSRP threshold.

The second UL transmission power may be a sum of the first UL transmission power and the power offset.

The determining of the second UL transmission power may comprise: determining a correction coefficient for path loss of the DL channel based on the power offset; and determining the second UL transmission power based on the path loss reflecting the correction coefficient.

The method may further comprise: receiving, from the first TRP, a medium access control (MAC) control element (CE) or downlink control information (DCI) including a correction coefficient corresponding to the power offset, wherein the second UL transmission power may be determined based on path loss reflecting the correction coefficient.

The method may further comprise: receiving, from the first TRP, RRC signaling including a plurality of correction coefficients, wherein the correction coefficient indicated by the MAC CE or the DCI may be one correction coefficient among the plurality of correction coefficients indicated by the RRC signaling.

The method may further comprise: receiving, from the first TRP, information indicating that UL transmission power is independently applied to each TRP, wherein, based on UL transmission power being indicated as independently applied to each TRP, the first UL transmission power and the second UL transmission power may be independently determined.

A user equipment (UE), according to exemplary embodiments of the present disclosure for achieving the above-described objective, may comprise: at least one processor, wherein the at least one processor may cause the UE to perform: performing downlink (DL) communication with a first transmission and reception point (TRP); determining a first uplink (UL) transmission power for first UL communication with the first TRP based on a channel state of a DL channel between the UE and the first TRP; performing the first UL communication with the first TRP using the first UL transmission power; determining a second UL transmission power for second UL communication with a second TRP based on a power offset and the channel state of the DL channel between the UE and the first TRP; and performing the second UL communication with the second TRP using the second UL transmission power.

In the determining of the second UL transmission power, the at least one processor may cause the UE to perform: measuring a quality of the DL channel based on a reference signal received through the DL channel; identifying a quality range to which the measured quality belongs; and identifying the power offset mapped to the quality range.

The at least one processor may further cause the UE to perform: receiving mapping information between one or more quality ranges and one or more power offsets, wherein the quality range and the power offset may be identified based on the mapping information.

The mapping information may be received through radio resource control (RRC) signaling from the first TRP.

The measured quality may be a reference signal received power (RSRP), and the quality range may be an RSRP range or an RSRP threshold.

The second UL transmission power may be a sum of the first UL transmission power and the power offset.

In the determining of the second UL transmission power, the at least one processor may cause the UE to perform: determining a correction coefficient for path loss of the DL channel based on the power offset; and determining the second UL transmission power based on the path loss reflecting the correction coefficient.

The at least one processor may further cause the UE to perform: receiving, from the first TRP, a medium access control (MAC) control element (CE) or downlink control information (DCI) including a correction coefficient corresponding to the power offset, wherein the second UL transmission power may be determined based on path loss reflecting the correction coefficient.

The at least one processor may further cause the UE to perform: receiving, from the first TRP, RRC signaling including a plurality of correction coefficients, wherein the correction coefficient indicated by the MAC CE or the DCI may be one correction coefficient among the plurality of correction coefficients indicated by the RRC signaling.

The at least one processor may further cause the UE to perform: receiving, from the first TRP, information indicating that UL transmission power is independently applied to each TRP, wherein, based on UL transmission power being indicated as independently applied to each TRP, the first UL transmission power and the second UL transmission power may be independently determined.

### [Advantageous Effects]

According to the present disclosure, in an asymmetric TRP system, a terminal may perform DL communication with sTRP, and the may perform UL communication with mTRP. In UL communication with mTRP, the terminal may determine UL transmission powers by applying different compensation coefficients (e.g., different power offsets) based on path losses to mTRP, and may perform UL communication with mTRP using the UL transmission powers. In other words, a first UL transmission power for a first TRP and a second UL transmission power for a second TRP may be independently determined. Accordingly, efficiency of power consumption in the terminal can be improved, and Accordingly, power efficiency of the terminal can be improved, and interference related to UL communication can be efficiently controlled.

### [Description of Drawings]

FIG. 1 is a conceptual diagram illustrating exemplary embodiments of a communication system.
FIG. 2 is a block diagram illustrating exemplary embodiments of a communication node constituting a communication system.
FIG. 3 is a block diagram illustrating exemplary embodiments of communication nodes performing communication.
FIG. 4A is a block diagram illustrating exemplary embodiments of a transmission path.
FIG. 4B is a block diagram illustrating exemplary embodiments of a reception path.
FIG. 5 is a conceptual diagram illustrating exemplary embodiments of a system frame in a communication system.
FIG. 6 is a conceptual diagram illustrating exemplary embodiments of a subframe in a communication system.
FIG. 7 is a conceptual diagram illustrating exemplary embodiments of a slot in a communication system.
FIG. 8 is a conceptual diagram illustrating exemplary embodiments of a time-frequency resource in a communication system.
FIG. 9 is a conceptual diagram illustrating an exemplary embodiment of an asymmetric TRP system.

### [Mode for Invention]

Since the present disclosure may be variously modified and have several forms, specific exemplary embodiments will be shown in the accompanying drawings and be described in detail in the detailed description. It should be understood, however, that it is not intended to limit the present disclosure to the specific exemplary embodiments but, on the contrary, the present disclosure is to cover all modifications and alternatives falling within the spirit and scope of the present disclosure.

Relational terms such as first, second, and the like may be used for describing various elements, but the elements should not be limited by the terms. These terms are only used to distinguish one element from another. For example, a first component may be named a second component without departing from the scope of the present disclosure, and the second component may also be similarly named the first component. The term "and/or" means any one or a combination of a plurality of related and described items.

In the present disclosure, "at least one of A and B" may refer to "at least one of A or B" or "at least one of combinations of one or more of A and B". In addition, "one or more of A and B" may refer to "one or more of A or B" or "one or more of combinations of one or more of A and B".

In the present disclosure, '(re)transmission' may refer to 'transmission', 'retransmission', or 'transmission and retransmission', '(re)configuration' may refer to 'configuration', 'reconfiguration', or 'configuration and reconfiguration', '(re)connection' may refer to 'connection', 'reconnection', or 'connection and reconnection', and '(re)access' may refer to 'access', 're-access', or 'access and re-access'.

When it is mentioned that a certain component is "coupled with" or "connected with" another component, it should be understood that the certain component is directly "coupled with" or "connected with" to the other component or a further component may be disposed therebetween. In contrast, when it is mentioned that a certain component is "directly coupled with" or "directly connected with" another component, it will be understood that a further component is not disposed therebetween.

The terms used in the present disclosure are only used to describe specific exemplary embodiments, and are not intended to limit the present disclosure. The singular expression includes the plural expression unless the context clearly dictates otherwise. In the present disclosure, terms such as 'comprise' or 'have' are intended to designate that a feature, number, step, operation, component, part, or combination thereof described in the specification exists, but it should be understood that the terms do not preclude existence or addition of one or more features, numbers, steps, operations, components, parts, or combinations thereof.

Unless otherwise defined, all terms (including technical and scientific terms) used herein have the same meaning as commonly understood by one of ordinary skill in the art to which this disclosure belongs. Terms that are generally used and have been in dictionaries should be construed as having meanings matched with contextual meanings in the art. In this description, unless defined clearly, terms are not necessarily construed as having formal meanings.

Hereinafter, exemplary embodiments of the present disclosure will be described in detail with reference to the accompanying drawings. In describing the disclosure, to facilitate the entire understanding of the disclosure, like numbers refer to like elements throughout the description of the figures and the repetitive description thereof will be omitted. The operations according to the exemplary embodiments described explicitly in the present disclosure, as well as combinations of the exemplary embodiments, extensions of the exemplary embodiments, and/or variations of the exemplary embodiments, may be performed. Some operations may be omitted, and a sequence of operations may be altered.

Even when a method (e.g., transmission or reception of a signal) to be performed at a first communication node among communication nodes is described in exemplary embodiments, a corresponding second communication node may perform a method (e.g., reception or transmission of the signal) corresponding to the method performed at the first communication node. In other words, when an operation of a user equipment (UE) is described, a base station corresponding thereto may perform an operation corresponding to the operation of the UE. Conversely, when an operation of a base station is described, a corresponding UE may perform an operation corresponding to the operation of the base station.

The base station may be referred to by various terms such as NodeB, evolved NodeB, next generation node B (gNodeB), gNB, device, apparatus, node, communication node, base transceiver station (BTS), radio remote head (RRH), transmission reception point (TRP), radio unit (RU), road side unit (RSU), radio transceiver, access point, access node, and the like. The user equipment (UE) may be referred to by various terms such as terminal, device, apparatus, node, communication node, end node, access terminal, mobile terminal, station, subscriber station, mobile station, portable subscriber station, on-board unit (OBU), and the like.

In the present disclosure, signaling may be one or a combination of two or more of higher layer signaling, MAC signaling, and physical (PHY) signaling. A message used for higher layer signaling may be referred to as a 'higher layer message' or 'higher layer signaling message'. A message used for MAC signaling may be referred to as a 'MAC message' or 'MAC signaling message'. A message used for PHY signaling may be referred to as a 'PHY message' or 'PHY signaling message'. The higher layer signaling may refer to an operation of transmitting and receiving system information (e.g., master information block (MIB), system information block (SIB)) and/or an RRC message. The MAC signaling may refer to an operation of transmitting and receiving a MAC control element (CE). The PHY signaling may refer to an operation of transmitting and receiving control information (e.g., downlink control information (DCI), uplink control information (UCI), or sidelink control information (SCI)).

In the present disclosure, 'configuration of an operation (e.g., transmission operation)' may refer to signaling of configuration information (e.g., information elements, parameters) required for the operation and/or information indicating to perform the operation. 'configuration of information elements (e.g., parameters)' may refer to signaling of the information elements. In the present disclosure, 'signal and/or channel' may refer to signal, channel, or both signal and channel, and 'signal' may be used to mean 'signal and/or channel'.

A communication network to which exemplary embodiments are applied is not limited to that described below, and the exemplary embodiments may be applied to various communication networks (e.g., 4G communication networks, 5G communication networks, and/or 6G communication networks). Here, 'communication network' may be used interchangeably with a term 'communication system'.

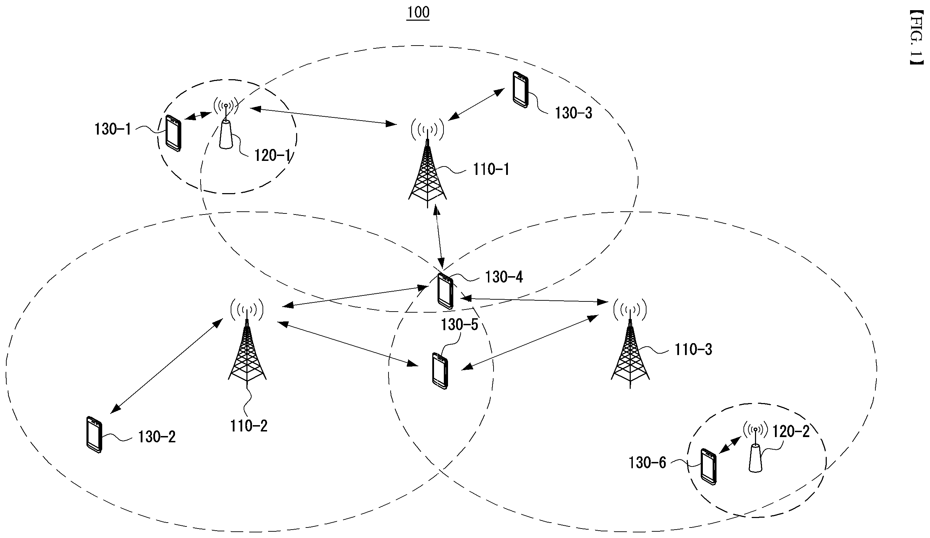

FIG. 1 is a conceptual diagram illustrating exemplary embodiments of a communication system.

As shown in FIG. 1, a communication system 100 may comprise a plurality of communication nodes 110-1, 110-2, 110-3, 120-1, 120-2, 130-1, 130-2, 130-3, 130-4, 130-5, and 130-6. In addition, the communication system 100 may further include a core network (e.g., a serving gateway (S-GW), a packet data network (PDN) gateway (P-GW), a mobility management entity (MME). When the communication system 100 is a 5G communication (e.g., NR system), the core network may include an access and mobility management function (AMF), a user plane function (UPF), a session management function (SMF), and the like.

The plurality of communication nodes 110 to 130 may support communication protocols (e.g., LTE communication protocol, LTE-A communication protocol, NR communication protocol, etc.) specified in 3^{rd} generation partnership project (3GPP) standards. The plurality of communication nodes 110 to 130 may support a code division multiple access (CDMA) technique, a wideband CDMA (WCDMA) technique, a time division multiple access (TDMA) technique, a frequency division multiple access (FDMA) technique, an orthogonal frequency division multiplexing (OFDM) technique, a filtered OFDM technique, a cyclic prefix OFDM (CP-OFDM) technique, a discrete Fourier transform spread OFDM (DFT-s-OFDM) technique, an orthogonal frequency division multiple access (OFDMA) technique, a single carrier FDMA (SC-FDMA) technique, a non-orthogonal multiple access (NOMA) technique, a generalized frequency division multiplexing (GFDM) technique, a filter bank multi-carrier (FBMC) technique, a universal filtered multi-carrier (UFMC) technique, a space division multiple access (SDMA) technique, or the like. Each of the plurality of communication node may have the following structure.

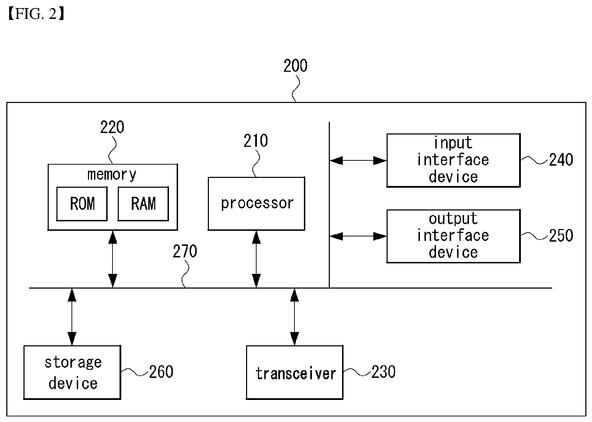

FIG. 2 is a block diagram illustrating exemplary embodiments of a communication node constituting a communication system.

As shown in FIG. 2, a communication node 200 may comprise at least one processor 210, a memory 220, and a transceiver 230 connected to the network for performing communications. Also, the communication node 200 may further comprise an input interface device 240, an output interface device 250, a storage device 260, and the like. Each component included in the communication node 200 may communicate with each other as connected through a bus 270.

The processor 210 may execute a program stored in at least one of the memory 220 and the storage device 260. The processor 210 may refer to a central processing unit (CPU), a graphics processing unit (GPU), or a dedicated processor on which methods in accordance with embodiments of the present disclosure are performed. Each of the memory 220 and the storage device 260 may be constituted by at least one of a volatile storage medium and a non-volatile storage medium. For example, the memory 220 may comprise at least one of read-only memory (ROM) and random access memory (RAM).

Referring again to FIG. 1, the communication system 100 may comprise a plurality of base stations 110-1, 110-2, 110-3, 120-1, and 120-2, and a plurality of terminals 130-1, 130-2, 130-3, 130-4, 130-5, and 130-6. The communication system 100 including the base stations 110-1, 110-2, 110-3, 120-1, and 120-2 and the terminals 130-1, 130-2, 130-3, 130-4, 130-5, and 130-6 may be referred to as an 'access network'. Each of the first base station 110-1, the second base station 110-2, and the third base station 110-3 may form a macro cell, and each of the fourth base station 120-1 and the fifth base station 120-2 may form a small cell. The fourth base station 120-1, the third terminal 130-3, and the fourth terminal 130-4 may belong to cell coverage of the first base station 110-1. Also, the second terminal 130-2, the fourth terminal 130-4, and the fifth terminal 130-5 may belong to cell coverage of the second base station 110-2. Also, the fifth base station 120-2, the fourth terminal 130-4, the fifth terminal 130-5, and the sixth terminal 130-6 may belong to cell coverage of the third base station 110-3. Also, the first terminal 130-1 may belong to cell coverage of the fourth base station 120-1, and the sixth terminal 130-6 may belong to cell coverage of the fifth base station 120-2.

Here, each of the plurality of base stations 110-1, 110-2, 110-3, 120-1, and 120-2 may refer to a Node-B, evolved Node-B (eNB), gNB, advanced base station (ABS), high reliability-base station (HR-BS), base transceiver station (BTS), radio base station, radio transceiver, access point, access node, radio access station (RAS), mobile multihop relay-base station (MMR-BS), relay station (RS), advanced relay station (ARS), high reliability-relay station (HR-RS), home NodeB (HNB), home eNodeB (HeNB), road side unit (RSU), radio remote head (RRH), transmission point (TP), transmission and reception point (TRP), or the like.

Each of the plurality of terminals 130-1, 130-2, 130-3, 130-4, 130-5, and 130-6 may refer to a user equipment (UE), terminal equipment (TE), advanced mobile station (AMS), high reliability-mobile station (HR-MS), terminal, access terminal, mobile terminal, station, subscriber station, mobile station, portable subscriber station, node, device, on-board unit (OBU), or the like.

Meanwhile, each of the plurality of base stations 110-1, 110-2, 110-3, 120-1, and 120-2 may operate in the same frequency band or in different frequency bands. The plurality of base stations 110-1, 110-2, 110-3, 120-1, and 120-2 may be connected to each other via an ideal backhaul or a non-ideal backhaul, and exchange information with each other via the ideal or non-ideal backhaul. Also, each of the plurality of base stations 110-1, 110-2, 110-3, 120-1, and 120-2 may be connected to the core network through the ideal or non-ideal backhaul. Each of the plurality of base stations 110-1, 110-2, 110-3, 120-1, and 120-2 may transmit a signal received from the core network to the corresponding terminal 130-1, 130-2, 130-3, 130-4, 130-5, or 130-6, and transmit a signal received from the corresponding terminal 130-1, 130-2, 130-3, 130-4, 130-5, or 130-6 to the core network.

In addition, each of the plurality of base stations 110-1, 110-2, 110-3, 120-1, and 120-2 may support multi-input multi-output (MIMO) transmission (e.g., a single-user MIMO (SU-MIMO), multiuser MIMO (MU-MIMO), massive MIMO, or the like), coordinated multipoint (CoMP) transmission, carrier aggregation (CA) transmission, transmission in an unlicensed band, sidelink communication (e.g., device-to-device (D2D) communication, proximity services (ProSe)), Internet of Things (IoT) communication, dual connectivity (DC), and/or the like. Here, each of the plurality of terminals 130-1, 130-2, 130-3, 130-4, 130-5, and 130-6 may perform operations corresponding to the operations of the plurality of base stations 110-1, 110-2, 110-3, 120-1, and 120-2, and operations supported by the plurality of base stations 110-1, 110-2, 110-3, 120-1, and 120-2. For example, the second base station 110-2 may transmit a signal to the fourth terminal 130-4 in the SU-MIMO manner, and the fourth terminal 130-4 may receive the signal from the second base station 110-2 in the SU-MIMO manner. Alternatively, the second base station 110-2 may transmit a signal to the fourth terminal 130-4 and fifth terminal 130-5 in the MU-MIMO manner, and the fourth terminal 130-4 and fifth terminal 130-5 may receive the signal from the second base station 110-2 in the MU-MIMO manner.

The first base station 110-1, the second base station 110-2, and the third base station 110-3 may transmit a signal to the fourth terminal 130-4 in the CoMP transmission manner, and the fourth terminal 130-4 may receive the signal from the first base station 110-1, the second base station 110-2, and the third base station 110-3 in the CoMP manner. Also, each of the plurality of base stations 110-1, 110-2, 110-3, 120-1, and 120-2 may exchange signals with the corresponding terminals 130-1, 130-2, 130-3, 130-4, 130-5, or 130-6 which belongs to its cell coverage in the CA manner. Each of the base stations 110-1, 110-2, and 110-3 may control sidelink communications between the fourth terminal 130-4 and the fifth terminal 130-5, and thus the fourth terminal 130-4 and the fifth terminal 130-5 may perform the sidelink communications under control of the second base station 110-2 and the third base station 110-3, respectively.

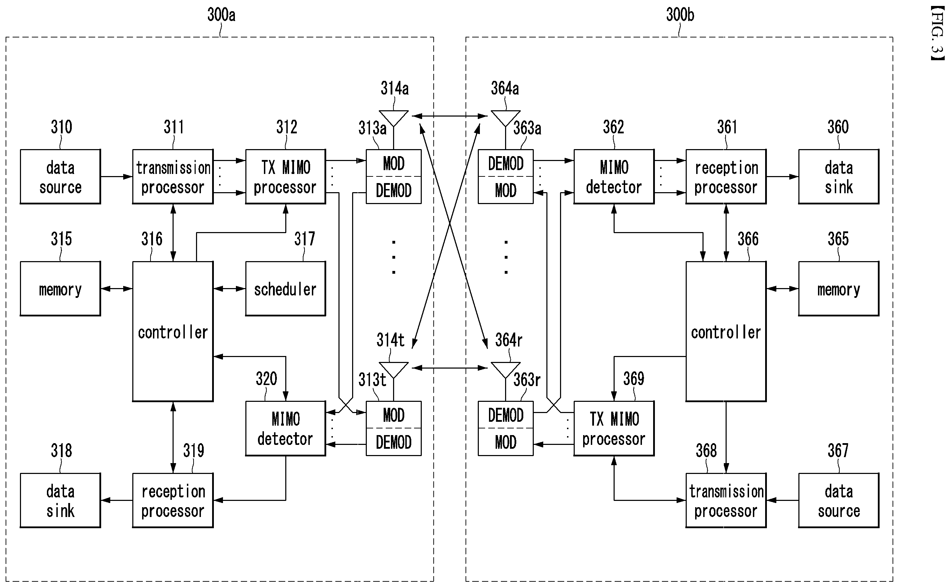

Meanwhile, communication nodes that perform communications in the communication network may be configured as follows. A communication node shown in FIG. 3 may be a specific exemplary embodiment of the communication node shown in FIG. 2.

FIG. 3 is a block diagram illustrating exemplary embodiments of communication nodes performing communication.

As shown in FIG. 3, each of a first communication node 300a and a second communication node 300b may be a base station or UE. The first communication node 300a may transmit a signal to the second communication node 300b. A transmission processor 311 included in the first communication node 300a may receive data (e.g., data unit) from a data source 310. The transmission processor 311 may receive control information from a controller 316. The control information may include at least one of system information, RRC configuration information (e.g., information configured by RRC signaling), MAC control information (e.g., MAC CE), or PHY control information (e.g., DCI, SCI).

The transmission processor 311 may generate data symbol(s) by performing processing operations (e.g., encoding operation, symbol mapping operation, etc.) on the data. The transmission processor 311 may generate control symbol(s) by performing processing operations (e.g., encoding operation, symbol mapping operation, etc.) on the control information. In addition, the transmission processor 311 may generate synchronization/reference symbol(s) for synchronization signals and/or reference signals.

A Tx MIMO processor 312 may perform spatial processing operations (e.g., precoding operations) on the data symbol(s), control symbol(s), and/or synchronization/reference symbol(s). An output (e.g., symbol stream) of the Tx MIMO processor 312 may be provided to modulators (MODs) included in transceivers 313a to 313t. The modulator may generate modulation symbols by performing processing operations on the symbol stream, and may generate signals by performing additional processing operations (e.g., analog conversion operations, amplification operation, filtering operation, up-conversion operation, etc.) on the modulation symbols. The signals generated by the modulators of the transceivers 313a to 313t may be transmitted through antennas 314a to 314t.

The signals transmitted by the first communication node 300a may be received at antennas 364a to 364r of the second communication node 300b. The signals received at the antennas 364a to 364r may be provided to demodulators (DEMODs) included in transceivers 363a to 363r. The demodulator (DEMOD) may obtain samples by performing processing operations (e.g., filtering operation, amplification operation, down-conversion operation, digital conversion operation, etc.) on the signals. The demodulator may perform additional processing operations on the samples to obtain symbols. A MIMO detector 362 may perform MIMO detection operations on the symbols. A reception processor 361 may perform processing operations (e.g., de-interleaving operation, decoding operation, etc.) on the symbols. An output of the reception processor 361 may be provided to a data sink 360 and a controller 366. For example, the data may be provided to the data sink 360 and the control information may be provided to the controller 366.

On the other hand, the second communication node 300b may transmit signals to the first communication node 300a. A transmission processor 368 included in the second communication node 300b may receive data (e.g., data unit) from a data source 367 and perform processing operations on the data to generate data symbol(s). The transmission processor 368 may receive control information from the controller 366 and perform processing operations on the control information to generate control symbol(s). In addition, the transmission processor 368 may generate reference symbol(s) by performing processing operations on reference signals.

A Tx MIMO processor 369 may perform spatial processing operations (e.g., precoding operations) on the data symbol(s), control symbol(s), and/or reference symbol(s). An output (e.g., symbol stream) of the Tx MIMO processor 369 may be provided to modulators (MODs) included in the transceivers 363a to 363t. The modulator may generate modulation symbols by performing processing operations on the symbol stream, and may generate signals by performing additional processing operations (e.g., analog conversion operation, amplification operation, filtering operation, up-conversion operations) on the modulation symbols. The signals generated by the modulators of the transceivers 363a to 363t may be transmitted through the antennas 364a to 364t.

The signals transmitted by the second communication node 300b may be received at the antennas 314a to 314r of the first communication node 300a. The signals received at the antennas 314a to 314r may be provided to demodulators (DEMODs) included in the transceivers 313a to 313r. The demodulator may obtain samples by performing processing operations (e.g., filtering operation, amplification operation, down-conversion operation, digital conversion operation) on the signals. The demodulator may perform additional processing operations on the samples to obtain symbols. A MIMO detector 320 may perform a MIMO detection operation on the symbols. The reception processor 319 may perform processing operations (e.g., de-interleaving operation, decoding operation, etc.) on the symbols. An output of the reception processor 319 may be provided to a data sink 318 and the controller 316. For example, the data may be provided to the data sink 318 and the control information may be provided to the controller 316.

Memories 315 and 365 may store the data, control information, and/or program codes. A scheduler 317 may perform scheduling operations for communication. The processors 311, 312, 319, 361, 368, and 369 and the controllers 316 and 366 shown in FIG. 3 may be the processor 210 shown in FIG. 2, and may be used to perform methods described in the present disclosure.

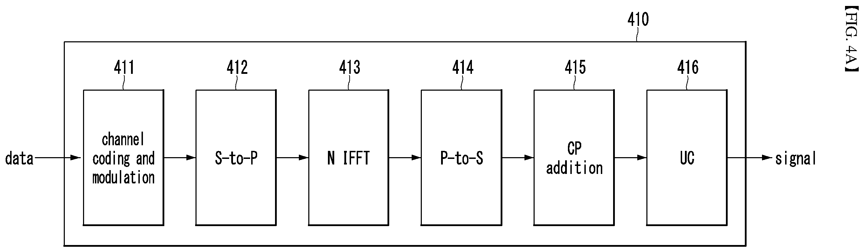

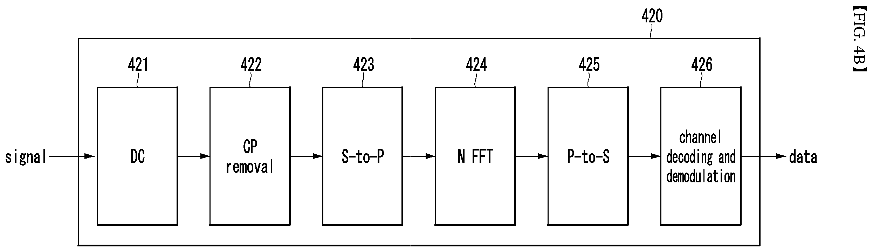

FIG. 4A is a block diagram illustrating exemplary embodiments of a transmission path, and FIG. 4B is a block diagram illustrating exemplary embodiments of a reception path.

As shown in FIGS. 4A and 4B, a transmission path 410 may be implemented in a communication node that transmits signals, and a reception path 420 may be implemented in a communication node that receives signals. The transmission path 410 may include a channel coding and modulation block 411, a serial-to-parallel (S-to-P) block 412, an N-point inverse fast Fourier transform (N-point IFFT) block 413, a parallel-to-serial (P-to-S) block 414, a cyclic prefix (CP) addition block 415, and up-converter (UC) 416. The reception path 420 may include a down-converter (DC) 421, a CP removal block 422, an S-to-P block 423, an N-point FFT block 424, a P-to-S block 425, and a channel decoding and demodulation block 426. Here, N may be a natural number.

In the transmission path 410, information bits may be input to the channel coding and modulation block 411. The channel coding and modulation block 511 may perform a coding operation (e.g., low-density parity check (LDPC) coding operation, polar coding operation, etc.) and a modulation operation (e.g., Quadrature Phase Shift Keying (OPSK), Quadrature Amplitude Modulation (QAM), etc.) on the information bits. An output of the channel coding and modulation block 411 may be a sequence of modulation symbols.

The S-to-P block 412 may convert frequency domain modulation symbols into parallel symbol streams to generate N parallel symbol streams. N may be the IFFT size or the FFT size. The N-point IFFT block 413 may generate time domain signals by performing an IFFT operation on the N parallel symbol streams. The P-to-S block 414 may convert the output (e.g., parallel signals) of the N-point IFFT block 413 to serial signals to generate the serial signals.

The CP addition block 415 may insert a CP into the signals. The UC 416 may up-convert a frequency of the output of the CP addition block 415 to a radio frequency (RF) frequency. Further, the output of the CP addition block 415 may be filtered in baseband before the up-conversion.

The signal transmitted from the transmission path 410 may be input to the reception path 420. Operations in the reception path 420 may be reverse operations for the operations in the transmission path 410. The DC 421 may down-convert a frequency of the received signals to a baseband frequency. The CP removal block 422 may remove a CP from the signals. The output of the CP removal block 422 may be serial signals. The S-to-P block 423 may convert the serial signals into parallel signals. The N-point FFT block 424 may generate N parallel signals by performing an FFT algorithm. The P-to-S block 425 may convert the parallel signals into a sequence of modulation symbols. The channel decoding and demodulation block 426 may perform a demodulation operation on the modulation symbols and may restore data by performing a decoding operation on a result of the demodulation operation.

In FIGS. 4A and 4B, discrete Fourier transform (DFT) and inverse DFT (IDFT) may be used instead of FFT and IFFT. Each of the blocks (e.g., components) in FIGS. 4A and 4B may be implemented by at least one of hardware, software, or firmware. For example, some blocks in FIGS. 4A and 4B may be implemented by software, and other blocks may be implemented by hardware or a combination of hardware and software. In FIGS. 4A and 4B, one block may be subdivided into a plurality of blocks, a plurality of blocks may be integrated into one block, some blocks may be omitted, and blocks supporting other functions may be added.

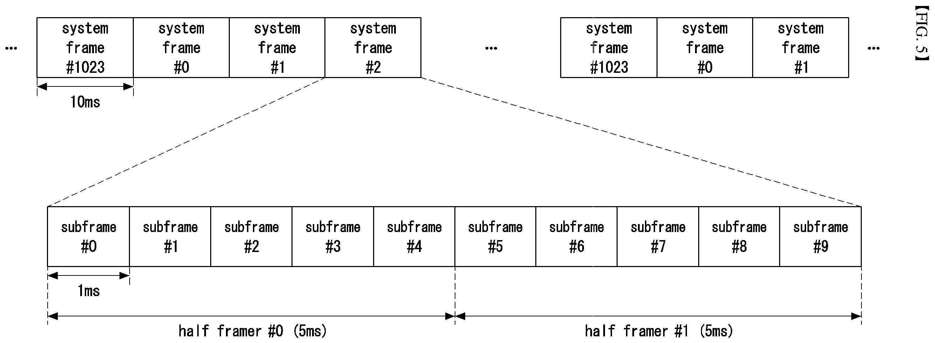

FIG. 5 is a conceptual diagram illustrating exemplary embodiments of a system frame in a communication system.

As shown in FIG. 5, time resources in the communication system may be divided on a frame basis. For example, system frames of the communication system may be configured continuously in the time domain. The length of the system frame may be 10 millisecond (ms). A system frame number (SFN) may be set to one of #0 to #1023. In this case, 1024 system frames may be repeated on the time domain of the communication system. For example, an SFN of a system frame after the system frame #1023 may be #0.

One system frame may include two half frames. The length of one half frame may be 5 ms. A half frame located at a starting region of the system frame may be referred to as 'half frame #0', and a half frame located at an ending region of the system frame may be referred to as 'half frame #1'. One system frame may include 10 subframes. The length of one subframe may be 1 ms. 10 subframes within one system frame may be referred to as subframes #0-#9.

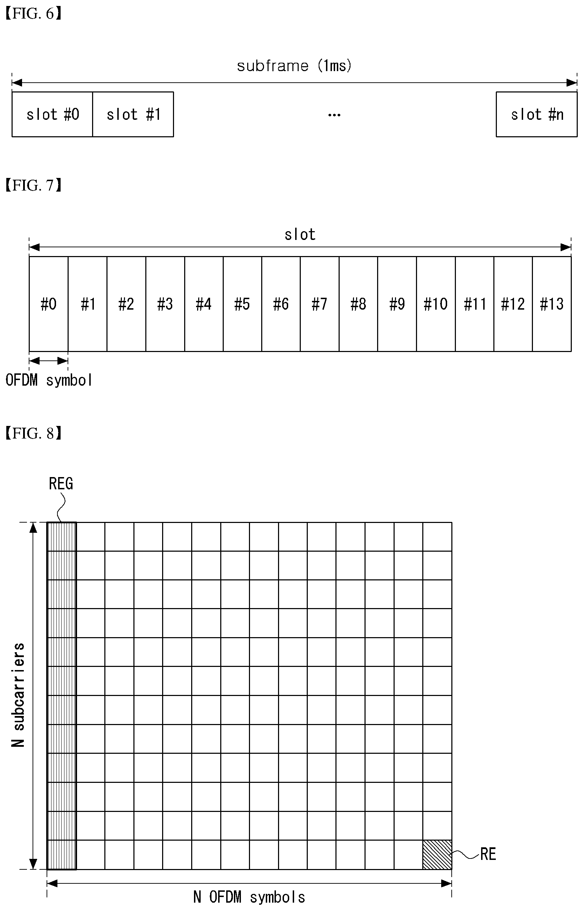

FIG. 6 is a conceptual diagram illustrating exemplary embodiments of a subframe in a communication system.

As shown in FIG. 6, one subframe may include n slots, and n may be a natural number. Accordingly, one subframe may consist of one or more slots.

FIG. 7 is a conceptual diagram illustrating exemplary embodiments of a slot in a communication system.

As shown in FIG. 7, one slot may include one or more symbols. For example, one slot shown in FIG. 7 may include 14 symbols. The length of slot may vary according to the number of symbols included in a slot and the length of symbol. Alternatively, the length of slot may vary according to a numerology.

The numerology applied to physical signals and channels in a communication system may be variable. The numerology may be adjusted to meet various technical requirements of the communication system. In a communication system where a cyclic prefix (CP)-based OFDM waveform technology is applied, the numerology may include a subcarrier spacing and a CP length (or CP type). Table 1 may illustrate a first exemplary embodiment of a method for configuring numerologies for a CP-OFDM-based communication system. Depending on a frequency band in which the communication system operates, at least some of the numerologies in Table 1 may be supported. Additionally, the communication system may support numerologies not listed in Table 1.

**[Table 1]**

| Subcarrier spacing | 15 kHz | 30 kHz | 60 kHz | 120 kHz | 240 kHz | 480 kHz |
|---|---|---|---|---|---|---|
| OFDM symbol length [µs] | 66.7 | 33.3 | 16.7 | 8.3 | 4.2 | 2.1 |
| CP length [us] | 4.76 | 2.38 | 1.19 | 0.60 | 0.30 | 0.15 |
| Number of OFDM symbols within 1ms | 14 | 28 | 56 | 112 | 224 | 448 |

When a subcarrier spacing is 15 kHz (e.g., µ = 0), the length of slot may be 1 ms. In this case, one system frame may include 10 slots. When a subcarrier spacing is 30 kHz (e.g., µ = 1), the length of slot may be 0.5 ms. In this case, one system frame may include 20 slots.

When a subcarrier spacing is 60 kHz (e.g., µ = 2), the length of slot may be 0.25 ms. In this case, one system frame may include 40 slots. When a subcarrier spacing is 120 kHz (e.g., µ = 3), the length of slot may be 0.125 ms. In this case, one system frame may include 80 slots. When a subcarrier spacing is 240 kHz (e.g., µ = 4), the length of slot may be 0.0625 ms. In this case, one system frame may include 160 slots.

The symbol may be configured as a downlink (DL) symbol, flexible (FL) symbol, or uplink (UL) symbol. A slot composed of only DL symbols may be referred to as a 'DL slot', a slot composed of only FL symbols may be referred to as a 'FL slot', and a slot composed of only UL symbols may be referred to as a 'UL slot'.

A slot format may be semi-statically configured through higher-layer signaling (e.g., RRC signaling). Information indicating a semi-static slot format may be included in system information, and the semi-static slot format may be configured cell-specifically. Additionally, a semi-static slot format may be further configured for each terminal through terminal-specific higher-layer signaling (e.g., RRC signaling). Flexible symbols in the cell-specific slot format may be overridden to be downlink symbols or uplink symbols through terminal-specific higher-layer signaling. Furthermore, a slot format may be dynamically indicated through physical layer signaling (e.g., slot format indicator (SFI) included in DCI). The semi-statically configured slot format may be overridden by the dynamically indicated slot format. For example, flexible symbols configured semi-statically may be overridden to be downlink symbols or uplink symbols by the SFI.

Reference signals may include Channel State Information-Reference Signal (CSI-RS), Sounding Reference Signal (SRS), Demodulation-Reference Signal (DM-RS), and Phase Tracking-Reference Signal (PT-RS). Channels may include Physical Broadcast Channel (PBCH), Physical Downlink Control Channel (PDCCH), Physical Downlink Shared Channel (PDSCH), Physical Uplink Control Channel (PUCCH), PUSCH (Physical Uplink Shared Channel), PSCCH (Physical Sidelink Control Channel), and PSSCH (Physical Sidelink Shared Channel). In the present disclosure, a control channel may refer to PDCCH, PUCCH, or PSCCH, and a data channel may refer to PDSCH, PUSCH, or PSSCH.

FIG. 8 is a conceptual diagram illustrating exemplary embodiments of a time-frequency resource in a communication system.

As shown FIG. 8, a resource composed of one OFDM symbol on the time axis and one subcarrier on the frequency axis may be defined as a 'resource element (RE)'. A resource composed of one OFDM symbol on the time axis and K subcarriers on the frequency axis may be defined as a 'resource element group (REG)'. The REG may include K REs. The REG may be used as a basic unit of resource allocation in the frequency domain. K may be a natural number. For example, K may be 12. N may be a natural number. In the slot shown in FIG.7, N may be 14. N OFDM symbols may be used as a basic unit of resource allocation in the time domain.

In the present disclosure, an RB may refer to a common RB (CRB). Alternatively, an RB may refer to a physical RB (PRB) or a virtual RB (VRB). In a communication system, a CRB may refer to an RB that constitutes a set of contiguous RBs (e.g., a common RB grid) based on a reference frequency (e.g., point A). A carrier and/or bandwidth part may be mapped onto the common RB grid. That is, a carrier and/or bandwidth part may be configured with CRB(s). The RBs or CRBs that constitute a bandwidth part may be referred to as PRBs, and a CRB index may be appropriately converted to a PRB index within the bandwidth part.

Downlink data may be transmitted through a PDSCH. A base station may transmit configuration information (e.g., scheduling information) of the PDSCH to a terminal through a PDCCH. The terminal may obtain the configuration information of the PDSCH by receiving the PDCCH (e.g., Downlink Control Information (DCI)). For example, the configuration information of the PDSCH may include a Modulation Coding Scheme (MCS) used for transmission/reception of the PDSCH, time resource information of the PDSCH, frequency resource information of the PDSCH, and feedback resource information for the PDSCH. The PDSCH may refer to a radio resource where the downlink data is transmitted and received. Alternatively, the PDSCH may refer to the downlink data itself. The PDCCH may refer to a radio resource where the downlink control information (e.g., DCI) is transmitted and received. Alternatively, the PDCCH may refer to the downlink control information itself.

The terminal may perform a monitoring operation for the PDCCH to receive the PDSCH transmitted from the base station. The base station may notify the terminal of configuration information for the PDCCH monitoring operation using a higher-layer message (e.g., Radio Resource Control (RRC) message). The configuration information for the PDCCH monitoring operation may include Control Resource Set (CORESET) information and search space information.

The CORESET information may include PDCCH DMRS information, PDCCH precoding information, and PDCCH occasion information, and the like. A PDCCH DMRS may be a DMRS used for demodulating a PDCCH. A PDCCH occasion refers to a region where a PDCCH may potentially exist, meaning it is a region where DCI can be transmitted. A PDCCH occasion may also be referred to as a PDCCH candidate. The PDCCH occasion information may include time resource information and frequency resource information for the PDCCH occasion. In the time domain, the length of the PDCCH occasion may be indicated in symbol units. In the frequency domain, the size of the PDCCH occasion can be indicated in RB units (e.g., in PRB units or CRB units).

The search space information may include a CORESET identifier (ID) associated with a search space, a periodicity of PDCCH monitoring, and/or an offset of PDCCH monitoring. The periodicity and offset of PDCCH monitoring may each be indicated in slot units. Additionally, the search space information may further include an index of a symbol where the PDCCH monitoring operation starts.

The base station may configure Bandwidth Part(s) (BWP(s)) for downlink communication. The BWP(s) may be configured differently for each terminal. The base station may notify the terminal of BWP configuration information using higher-layer signaling. The higher-layer signaling may refer to a transmission operation of system information and/or a transmission operation of RRC message(s). The number of BWPs configured for a single terminal may be one or more. The terminal may receive the BWP configuration information from the base station and identify the configured BWP(s) based on the received configuration information. When multiple BWPs are configured for downlink communication, the base station may activate one or more BWPs from among the multiple BWPs. The base station may transmit configuration information of the activated BWP(s) to the terminal using at least one of higher-layer signaling, Medium Access Control (MAC) Control Element (CE), or DCI. The base station may perform downlink communication using the activated BWP(s). The terminal may identify the activated BWP(s) by receiving the configuration information from the base station and perform downlink reception operations on the activated BWP(s).

Meanwhile, a communication system (e.g., NR communication system, 5G communication system, or 6G communication system) may support use scenarios such as enhanced Mobile BroadBand (eMBB), Ultra Reliable Low Latency Communication (URLLC), and massive Machine Type Communication (mMTC). The communication system (e.g., communication network) may support a transmission and reception point (TRP) technology (e.g., multi-TRP (mTRP) technology and/or single TRP (sTRP) technology). The communication system supporting the TRP technology may be referred to as a TRP system (e.g., mTRP system and/or sTRP system). In the present disclosure, 'TRP' may have a meaning including 'sTRP' and/or 'mTRP', and 'TRP' may refer to 'sTRP' or 'mTRP' depending on a context. A TRP may refer to an antenna set, antenna group, and/or antenna array. A TRP may be associated with a CORESET and/or a beam (e.g., beam group).

The mTRP technology may fall under a category of MIMO technology. The mTRP may have characteristics (e.g., cell-level characteristics) of macro cells, small cells, pico cells, and/or femto cells. The mTRP may perform data transmission for a terminal. In a case where a channel (e.g., link) with a non-uniform channel condition exists due to an obstacle and/or interference, the mTRP may mitigate the effect caused by the obstacle and/or interference. The mTRP may improve a data transmission rate for a terminal located in a cell edge.

mTRP-based communication may be performed based on a coherent joint transmission (CJT) scheme or a non-coherent joint transmission (NCJT) scheme. In the CJT scheme, a base station may be aware of channel information between each TRP and a terminal and may perform a preprocessing operation for data based on the channel information. In this case, an overhead caused by a transmission procedure of the channel information may increase, and synchronization constraints among the TRPs may occur. In the NCJT scheme, a base station may not need to be aware of channel information between each TRP and a terminal. The mTRP may transmit data to the terminal without performing a preprocessing operation such as phase compensation. The complexity of the NCJT scheme may be lower than the complexity of the CJT scheme.

NCJT-based mTRP communication may be performed based on a single-DCI scheme or a multi-DCI scheme. In the single-DCI scheme, PDSCHs transmitted by mTRP may be scheduled by a single DCI. The single DCI may be transmitted by one TRP of the mTRP. In the multi-DCI scheme, a PDSCH transmitted by each TRP may be scheduled by a DCI transmitted by the corresponding TRP. For example, a first PDSCH transmitted by a first TRP may be scheduled by a first DCI transmitted by the first TRP, and a second PDSCH transmitted by a second TRP may be scheduled by a second DCI transmitted by the second TRP. In other words, a plurality of PDSCHs may be scheduled using a plurality of DCIs.

In the single-DCI scheme, a terminal may expect to receive PDSCHs transmitted by different TRPs through different layers while using the same time and frequency resource. Alternatively, the terminal may expect to receive PDSCHs transmitted by different TRPs through different time resources (e.g., different time regions) while using the same frequency resource and the same layer. Alternatively, the terminal may expect to receive PDSCHs transmitted by different TRPs through different frequency resources (e.g., different frequency regions) while using the same time resource and the same layer.

In the multi-DCI scheme, PDSCH scheduling for each TRP may be performed by an individual DCI. PDSCHs scheduled by a plurality of DCIs may be fully overlapped or partially overlapped. Alternatively, PDSCHs scheduled by a plurality of DCIs may not be overlapped. In both the single-DCI scheme and the multi-DCI scheme, the DCI may include transmission configuration indicator (TCI) state information for PDSCH(s).

An indication/configuration of a TCI state for a terminal may be interpreted as an indication/configuration of a beam (e.g., a transmission beam and/or a reception beam). In other words, the TCI state may have a meaning corresponding to the beam. From the perspective of downlink (DL) communication, configuration of a TCI state may refer to configuration of a quasi-co-location (QCL). From the perspective of uplink (UL) communication, configuration of a TCI state may refer to configuration of a spatial filter. A unified TCI state may indicate (e.g., configure) a common beam regardless of DL communication and UL communication. Alternatively, a unified TCI state may indicate (e.g., configure) a common beam for each of DL communication and UL communication. The unified TCI may be referred to as 'UTCI'.

To enhance the reliability and/or robustness of mTRP communication, improvements such as PDCCH enhancements may be applied. Deployment scenarios for PDCCH enhancement may be classified into a single frequency network (SFN) and a non-SFN.

In the SFN scheme, different TRPs or different panels may transmit the same PDCCH using the same resource (e.g., the same time resource, the same frequency resource, and/or the same spatial resource). In other words, all TRPs or all panels may transmit the PDCCH using the same DMRS configuration, the same DMRS position, and/or the same DMRS sequence. In this case, from the reception perspective for the TRPs or panels, TCI states may be implicitly configured differently. The above-described exemplary embodiment may be performed based on a plurality of TCI states of a CORESET. Synchronization constraints for an ideal backhaul or a near-ideal backhaul among the TRPs may exist.

In the NSFN scheme, PDCCHs generated by the respective TRPs may be multiplexed in the time domain and/or the frequency domain, and the multiplexed PDCCHs may be transmitted to the terminal. This scheme may be an mTRP-based PDCCH repetition scheme. In the NSFN scheme, the number of encoded bits equal to the number of bits delivered through one PDCCH generated in each TRP may be divided among the TRPs, and the TRP-specific bits (e.g., encoded bits) may be transmitted through a different PDCCH candidate for each TRP. This scheme may correspond to an sTRP-based PDCCH transmission scheme.

In the mTRP-based PDCCH repetition scheme, a PDCCH may be duplicated according to the number of TRPs, and the PDCCHs may be transmitted in the same search spaces (e.g., search spaces having the same index) within different search space sets, each having the same number of PDCCH candidates. In this case, the search space sets may exist within the same CORESET or within different CORESETs. Since one TCI state may be associated with each CORESET, when PDCCHs are transmitted from different search spaces within the same CORESET, only one TCI state for the PDCCHs transmitted from the different search spaces may be indicated (e.g., configured). In this case, the terminal may receive one PDCCH from one TRP at a specific time.

When the PDCCHs are transmitted from the same search spaces within different CORESETs, the terminal may implicitly expect to receive the PDCCH from sTRP or mTRP depending on the number of TCI states (e.g., TCI states indicated or configured by the base station). In this case, a single PDCCH may be divided into as many PDCCHs as the number of TRPs, and the divided PDCCHs may be transmitted in different PDCCH candidates. In this case, an aggregation level and a combined aggregation level may be the same. In the above exemplary embodiment, the PDCCH candidates may be allocated to different CORESETs. A payload size for a combination of finally distributed PDCCHs may be the same as a payload size of a PDCCH transmitted from sTRP. Accordingly, in terms of decoding complexity, the sTRP-based PDCCH transmission scheme may be more advantageous than the mTRP-based PDCCH repetition scheme.

A terminal may perform mTRP communication or sTRP communication with a base station. The mTRP communication between the terminal and the base station may be performed via mTRP associated with the base station. The sTRP communication between the terminal and the base station may be performed via sTRP associated with the base station. The mTRP communication may be referred to as first TRP communication, and the sTRP communication may be referred to as second TRP communication. Alternatively, the mTRP communication may be referred to as second TRP communication, and the sTRP communication may be referred to as first TRP communication. The expression 'A terminal performs first TRP communication with a base station' may mean that the terminal performs mTRP communication or sTRP communication with the base station via one or more TRPs associated with the base station. The expression "A terminal performs second TRP communication with a base station" may mean that "the terminal performs sTRP communication or mTRP communication with the base station via one or more TRPs associated with the base station".

In a communication system, a united TCI framework may be supported. A base station may transmit information of a pool (e.g., pool list) of TCI states to a terminal using RRC signaling. The terminal may receive the information of the pool (e.g., pool list) of TCI states through the RRC signaling of the base station. The base station may configure type information of TCI states for the terminal. The type information may indicate a joint DL/UL beam indication or a separate DL/UL beam indication. The joint DL/UL beam indication may be referred to as 'joint indication' or 'joint type'. The separate DL/UL beam indication may be referred to as 'separate indication' or 'separate type'.

When the joint type (e.g., joint indication) is configured, a TCI state (e.g., one TCI state) for DL and UL may be configured. In other words, a DL TCI state configuration and a UL TCI state configuration may be the same. The terminal may expect that a TCI state indicated by an information element included in PDSCH configuration information is applied to both DL (e.g., DL signal/channel) and UL (e.g., UL signal/channel). The term 'signal/channel' may refer to a signal and/or a channel. When the separate type (e.g., separate indication) is configured, TCI states for DL and UL, respectively, may be configured. In other words, a DL TCI state configuration may be distinguished from a UL TCI state configuration. The terminal may expect that a UL TCI state indicated by an information element included in UL BWP configuration information is applied to UL (e.g., UL signal/channel). A UL signal/channel may include PUSCH, PUCCH, and/or SRS.

After the pool (e.g., pool list) of TCI states is configured (e.g., indicated) by RRC signaling, the base station may indicate TCI state(s) (e.g., application of the TCI state(s)) using DCI (e.g., DCI signaling). Due to the constraint of the DCI size (e.g., bits of DCI fields), the base station may preferentially activate candidate TCI state(s) using MAC signaling (e.g., MAC CE signaling). In other words, candidate TCI states, up to a certain number (e.g., a maximum number) that can be indicated or configured through DCI, may be preferentially activated by a MAC CE.

For the activated candidate TCI state(s), DCI may include a codepoint corresponding to a single TCI state or two TCI states according to a TCI state type (e.g., joint type or separate type). When the joint type is configured, a codepoint corresponding to a single TCI state may be delivered by the DCI. When the separate type is configured, a codepoint corresponding to two TCI states may be delivered by the DCI.

The unified TCI framework may be extended to support multiple TRPs. Up to two TRPs may be supported. A base station may configure up to 128 TCI states for a TCI state pool through RRC configuration. The base station may activate up to 32 TCI states corresponding to 8 codepoints using a MAC CE. The base station may indicate up to 4 TCI states for two TRPs using DCI.

To identify a DL channel state, a synchronization signal block (SSB) and/or a CSI-RS may be used. SSB may be periodically transmitted for time synchronization between a terminal and a base station. SSB may be transmitted even without a transmission request (e.g., transmission demand). Accordingly, transmission overhead of SSB may be lower than transmission overhead of CSI-RS. SSB may be transmitted within a specific frequency region. To identify a channel state for a frequency region to be measured by the terminal and/or an entire frequency region supported by a system, SSB may not be used due to a constraint on a transmission frequency region. In channel state measurement, each of SSB and CSI-RS may have advantages and disadvantages. Depending on a specific environment and/or a specific condition, SSB or CSI-RS may be used for measurement (e.g., identification) of a DL channel state.

Channel state reporting (e.g., CSI reporting) may be classified into three types. For example, channel state reporting may be classified into periodic channel state reporting, semi-persistent channel state reporting, and aperiodic channel state reporting. In periodic channel state reporting (e.g., periodic CSI reporting), a terminal may transmit a channel state report to a base station according to a periodicity configured by the base station. In semi-persistent channel state reporting (e.g., semi-persistent CSI reporting), a terminal may transmit a channel state report to a base station during a predetermined duration. In aperiodic channel state reporting (e.g., aperiodic CSI reporting), a terminal may transmit a channel state report to a base station according to a request (e.g., CSI request) from the base station. In other words, the channel state report may be intermittently transmitted.

The channel state report may include precoding matrix indicator (PMI), rank indicator (RI), layer indicator (LI), channel quality indicator (CQI), CSI reference resource indicator (CRI), SS/PBCH block resource indicator (SSBRI), reference signal received power (RSRP), and/or signal-to-interference-plus-noise ratio (SINR). The channel state report may include a capability index. The channel state report may include up to eight information items. CSI-RS may be used for measurement of a channel state. The base station may transmit, to the terminal, an RRC message including resource information (e.g., *CSI-ResourceConfig*, *CSI-MeasConfig*) for CSI-RS. The terminal may receive the RRC message from the base station, and may obtain the resource information for CSI-RS included in the RRC message.

The resource information for CSI-RS may include at least one of a time resource through which CSI-RS is transmitted, a frequency resource through which CSI-RS is transmitted, a transmission periodicity of CSI-RS, or a resource type (e.g., a periodic type, a semi-persistent type, an aperiodic type) of CSI-RS. In addition, the RRC message may include configuration information (e.g., *CSI-ReportConfig*) for CSI reporting. A resource type of CSI-RS and a type of CSI reporting (e.g., CSI measurement reporting) may be independently configured. For example, when aperiodic CSI reporting is required, the terminal may perform measurements on all CSI-RS resources regardless of whether each resource is a periodic CSI-RS resource, a semi-persistent CSI-RS resource, or an aperiodic CSI-RS resource, and may transmit, to the base station, an aperiodic CSI report including measurement results. As another example, when periodic CSI reporting is required, the terminal may perform measurements on periodic CSI-RS resources, and may transmit, to the base station, periodic CSI reports including measurement results. As still another example, when semi-persistent CSI reporting is required, the terminal may perform measurements on periodic CSI-RS resources and/or semi-persistent CSI-RS resources, and may transmit, to the base station, a semi-persistent aperiodic CSI report including measurement results.

Configuration of CSI-RS resources may have a hierarchical structure. In other words, CSI-RS resources may be hierarchically configured. To indicate a minimum unit for obtaining channel information, a set of RE(s) having a specific pattern in the time domain and the frequency domain may be defined as a resource. To indicate (e.g., configure) a set of resources collectively, a resource set may be defined. Separate IDs may be allocated to distinguish each resource and each resource set. Different resource sets may include different resources. Alternatively, different resource sets may include the same resource(s). To flexibly utilize resources and resource sets, one group (e.g., a resource set list) including resource sets may be configured, and the one group may be defined based on resource configuration information (e.g., *CSI-ResourceConfig*). A specific ID for a set of resource sets (e.g., a resource set list) may be configured.

A set of CSI-RS resource sets may be defined as a 'CSI-RS resource set list' or a 'set list'. In the present disclosure, periodic may be referred to as 'P', semi-persistent may be referred to as 'SP', and aperiodic may be referred to as 'AP'. In other words, periodic CSI-RS, semi-persistent CSI-RS, and aperiodic CSI-RS may be respectively referred to as P CSI-RS, SP CSI-RS, and AP CSI-RS, and periodic CSI report, semi-persistent CSI report, and aperiodic CSI report may be respectively referred to as P CSI report, SP CSI report, and AP CSI report. CSI-RS resource(s) according to a type (e.g., P, SP, AP) may be configured in units of CSI-RS resource set lists. CSI-RS resource set(s) and/or CSI-RS resource(s) belonging to the same CSI-RS resource set list may be interpreted as having the same type. Since a CSI-RS resource set list is configured according to a type, a CSI report may be requested or transmitted for each CSI-RS resource set list. Configuration of CSI-RS resources may have a hierarchical structure in the order of 'CSI-RS resource → CSI-RS resource set → CSI-RS resource set list'. One or more CSI-RS resources may belong to a CSI-RS resource set, and one or more CSI-RS resource sets may belong to a CSI-RS resource set list.

Configuration information of CSI reporting (i.e., CSI report configuration information) may be transmitted to a terminal together with configuration information of CSI-RS resources. Depending on a purpose of CSI measurement (e.g., channel measurement, interference measurement), configuration information (e.g., allocation information) for different CSI-RS resource set lists may be transmitted to the terminal. Configuration information of CSI reporting may include all information required for the terminal to transmit CSI reports. For example, the configuration information of CSI reporting may include at least one of a CSI reporting type (e.g., P, SP, AP), a time resource for which CSI measurement is required, a frequency resource for which CSI measurement is required, or types of information included in CSI reports. A channel through which a CSI report is transmitted may vary depending on the size of the CSI report. For example, a P CSI report may be transmitted through a PUCCH. An SP CSI report may be transmitted through a PUCCH or a PUSCH. An AP CSI report may be transmitted through a PUSCH. The size of an AP CSI report may be greater than that of an SP CSI report, and the size of an SP CSI report may be greater than that of a P CSI report.

A CSI reporting procedure for each type may be performed as follows. A base station may transmit, to a terminal, an RRC message including CSI measurement configuration information, CSI-RS resource configuration information, and/or CSI report configuration information. The terminal may obtain the CSI measurement configuration information, the CSI-RS resource configuration information, and/or the CSI report configuration information from the base station. In a P CSI reporting procedure, the terminal may measure a DL channel based on a P CSI-RS without additional triggering signaling (e.g., triggering signal), and may transmit, to the base station, a CSI report including a measurement result according to a CSI reporting periodicity configured by RRC signaling (e.g., an RRC message).

In an SP CSI reporting procedure, a base station may transmit, to a terminal, information (e.g., MAC CE) indicating activation of SP CSI measurement/reporting. When the SP CSI measurement/reporting is activated, the terminal may measure a DL channel based on a P CSI-RS, and may transmit, to the base station, a CSI report including a measurement result according to a CSI reporting periodicity configured by RRC signaling (e.g., an RRC message). Transmission of the CSI report may continue until information (e.g., MAC CE) indicating deactivation of SP CSI measurement/reporting is received from the base station. Activation signaling and/or deactivation signaling for an SP CSI measurement/reporting procedure may be required. During an interval between the activation signaling and the deactivation signaling, the terminal may measure a DL channel based on an SP CSI-RS, and may transmit, to the base station, a CSI report including measurement results.

In an AP CSI reporting procedure, a base station may transmit, to a terminal, a signaling message (e.g., DCI or MAC CE) for triggering AP CSI measurement/reporting. The signaling message may indicate triggering of one CSI report. The terminal may receive the signaling message from the base station, and may determine that AP CSI measurement/reporting is triggered based on the signaling message. An AP CSI-RS resource measured by the terminal may be an AP CSI-RS resource transmitted after N slots from a slot in which the signaling message for triggering AP CSI measurement/reporting is received, and the AP CSI report may be transmitted after M slots from the slot in which the signaling message for triggering AP CSI measurement/reporting is received. Each of N and M may be a natural number. Information on N indicating the AP CSI-RS resource and/or information on M indicating timing of the AP CSI report may be transmitted to the terminal through RRC signaling. Information on N indicating the AP CSI-RS resource and/or information on M indicating timing of the AP CSI report may be transmitted to the terminal together with the CSI measurement configuration information, CSI-RS resource configuration information, and/or CSI report configuration information.

A terminal may individually perform data transmission using a plurality of panels. In other words, the terminal may perform data transmission independently using each of the plurality of panels. The terminal may transmit, to a base station, information required for data transmission for each panel. The base station may obtain, from the terminal, the information required for data transmission for each panel. One of the pieces of information required for data transmission for each panel may be power headroom information (e.g., a power headroom report (PHR)). The power headroom information may indicate remaining power excluding power used by the terminal for data transmission. The power headroom information may be configured in units of subframes. Transmission power for data may correspond to a predicted value (e.g., predicted transmission power), not a value actually used for transmission (e.g., actual transmission power). The power used for actual data transmission cannot exceed maximum transmission power supported by the terminal. The predicted transmission power may exceed the maximum transmission power supported by the terminal. The power headroom information reported by the terminal may have a positive value or a negative value.

A PHR may be delivered from a terminal to a base station through the MAC layer. In other words, the PHR may be included in a MAC CE. A power headroom (PH) index (e.g., a PH value) may be defined in a table (e.g., mapping information between PH indexes and transmission power ranges) in the technical specifications. In the table, a PH index may be mapped to each transmission power range. For example, a PH index may indicate PH 0, and PH 0 may be mapped to -23dB ≤ PH < -22dB in the table. The size of a PHR field included in the MAC CE may vary depending on the number of PH indexes. The terminal may transmit a PHR for each panel. A path loss associated with the PHR may be determined based on a reference signal (RS) associated with beam configuration (e.g., a TCI state and/or QCL). Whether PHR transmission for each panel is supported may be determined based on a capability of the terminal. For example, a certain terminal may support PHR transmission for each panel, and another terminal may not support PHR transmission for each panel. The terminal may report, to the base station, information on whether PHR transmission for each panel is supported. As a parameter indicating whether PHR transmission for each panel is supported, a parameter (e.g., *twoPHRmode*) indicating whether PHR transmission for mTRP is supported may be used. In an mTRP environment (e.g., an mTRP system), methods for improving uplink communication performance are required.

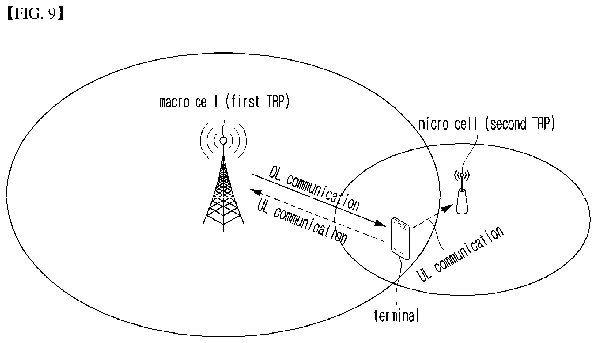

FIG. 9 is a conceptual diagram illustrating an exemplary embodiment of an asymmetric TRP system.

As shown in FIG. 9, a macro cell (e.g., a macro TRP, a first TRP) may cover a relatively large area, and a micro cell (e.g., a micro TRP, a second TRP) may cover a relatively small area. DL traffic (e.g., traffic for DL data transmission) may be greater than UL traffic (e.g., traffic for UL data transmission). Accordingly, transmission resources may be preferentially configured for DL transmission. The transmission power of a base station may be greater than the transmission power of a terminal, and DL coverage may be wider than UL coverage.

A micro cell (e.g., a second TRP) adjacent to the terminal may be present. Power efficiency of UL communication with the adjacent micro cell may be better than that of UL communication with the macro cell (e.g., the first TRP) connected to the terminal. A TRP may be an entity that transmits and receives data with the terminal. A TRP and a cell may be interchangeably used. A TRP may be used with the same meaning as a cell depending on context. A cell may be used with the same meaning as a TRP depending on context. A specific TRP (e.g., a serving cell) may perform a control function for another TRP (e.g., a TRP controlled by the specific TRP). The specific TRP may perform a data scheduling function.

The terminal may perform UL communication with the micro cell while performing DL communication with the macro cell. When channel reciprocity between a DL channel for the macro cell and a UL channel for the micro cell is established, the terminal may determine (e.g., configure) transmission power for the UL channel of the micro cell based on path loss determined based on an RS received from the macro cell. Alternatively, in an asymmetric TRP system, a terminal may perform DL communication with one TRP (e.g., a macro cell), and may perform UL communication with a plurality of TRPs (e.g., the macro cell and a micro cell). In the above-described asymmetric TRP system, the terminal may determine (e.g., configure) transmission power for each UL channel of the macro cell and the micro cell based on path loss determined based on an RS received from the macro cell. In this case, UL transmission power for the micro cell may be set to a high level. In other words, since the UL transmission power for the micro cell is determined based on a channel state between the macro cell and the terminal, rather than a channel state between the micro cell and the terminal, the UL transmission power for the micro cell may be set to a high level. Even though UL communication (e.g., transmission of a channel and/or a signal) with the micro cell is possible with low transmission power, the UL communication with the micro cell may be performed with high transmission power. Accordingly, power consumption of the terminal may increase unnecessarily, and UL communication with high transmission power may cause interference to other terminals.

To solve the above-described problem, an additional method for configuring UL transmission power in an asymmetric TRP system may be required. The asymmetric TRP system may include mTRP, wherein sTRP among the mTRP performs DL communication and the mTRP perform UL communication. The sTRP performing DL communication may be referred to as a DL sTRP. The mTRP performing UL communication may be referred to as UL mTRP. A method of power control (e.g., power configuration, power determination) for UL communication in the asymmetric TRP system is described. In the present disclosure, a power control method for a PUSCH is described, but the power control method for the PUSCH may be applied to another UL channel and/or another UL signal. In the asymmetric TRP system, transmission power for UL mTRP may be determined based on path loss derived based on a reference signal received from sTRP. In other words, in the exemplary embodiment of FIG. 9, first transmission power for a first TRP may be determined based on a measurement result for a reference signal received from the first TRP, and second transmission power for a second TRP may be determined based on the measurement result for the reference signal received from the first TRP. An additional path loss correction method for each TRP of UL mTRP may be required.

The transmission power of a PUSCH may be determined based on Equation 1 below. For example, in the exemplary embodiment of FIG. 9, a first transmission power for the first TRP may be determined based on Equation 1 below. $\begin{matrix}{P}_{PUSCH , b , f , c} \left(i, j, {q}_{d}, l\right) = \\ min \left\{\begin{matrix}{P}_{CMAX , f , c} \left(i\right) \\ {P}_{O _ PUSCH , b , f , c} \left(j\right) + 10 {log}_{10} \left({2}^{μ}⋅{M}_{RB , b , f , c}^{PUSCH}\left(i\right)\right) + {α}_{b , f , c} \left(j\right) ⋅ {PL}_{b , f , c} \left({q}_{d}\right) + {Δ}_{TF , b , f , c} \left(i\right) + {f}_{b , f , c} \left(i, l\right)\end{matrix}\right\} \\ \left[dBm\right]\end{matrix}$

A PUSCH occasion i may be defined as a slot index within a system frame number (SFN). µ may indicate a subcarrier spacing (SCS) for the PUSCH. *s* may indicate a start symbol of the PUSCH. f may indicate a carrier of a serving cell c. The PUSCH may be configured over a duration having a length *L* from the start symbol s. *j* may be used as an index for identifying a parameter set (e.g., parameter group). *l* may be used as an index for distinguishing power control adjustment states. *b* may be used to indicate an active BWP through which the PUSCH is transmitted. *q_{d}* may indicate a resource index of an RS for path loss measurement.

A base station (e.g., the first TRP of FIG. 9) may transmit, to the terminal through RRC signaling, serving cell configuration information, information on candidate TCI states (e.g., a TCI state pool), and/or configuration information for power control according to each TCI state (e.g., *P_{O_UE_PUSCH,b,f,c}*(*j*), *α_{b,f,c}*(*j*), PUSCH power control adjustment state *l*). The terminal may receive the information from the base station through RRC signaling. The information on the candidate TCI states and/or the power control configuration information for each TCI state may include a resource index *q_{d}* of an RS for path loss measurement. The terminal may determine (e.g., configure or control) transmission power for UL communication (e.g., PUSCH transmission) based on a TCI state and power configuration information associated with the TCI state. In the present disclosure, the base station may correspond to the macro cell (e.g., the macro TRP or the first TRP) in FIG. 9 depending on context.

### 1. Proposal #1: Configuration/Indication of Additional Power Control through RRC Signaling

A base station (e.g., the first TRP of FIG. 9) may transmit, to a terminal through signaling (e.g., RRC signaling), configuration (e.g., indication) of additional power control for UL communication (e.g., UL transmission). The terminal may receive the configuration of additional power control for UL communication through signaling from the base station. The configuration of additional power control may include condition(s) for applying the additional power control and/or value(s) of the additional power control corresponding to the condition(s). The value(s) of the additional power control may be an absolute value or a relative value. The relative value of the additional power control may be a transmission power value based on a predefined rule. Alternatively, the relative value of the additional power control may correspond to a portion of the transmission power value based on the predefined rule. When configuration of the additional power control is transmitted through RRC signaling, dynamic control (e.g., control through DCI or MAC CE) for additional power may not be supported. When RRC signaling is used, location-dependent characteristics of the base station may be utilized, and signaling overhead may be reduced.

### A. Proposal #1-1

The base station may configure (e.g., indicate), to the terminal, a single variable (e.g., a quality threshold, a quality range) related to a specific condition associated with coverage among TRPs, a value related to the single variable, and/or a power offset (e.g., an additional offset, a correction coefficient) for transmission power related to the specific condition. The terminal may obtain the information configured by the base station. The quality threshold may be an RSRP threshold, a reference signal received quality (RSRQ) threshold, and/or a SINR threshold. The quality range may be an RSRP range, an RSRQ range, and/or a SINR range. The quality threshold and the quality range may correspond to each other. When the configured condition (e.g., the RSRP threshold, the RSRQ threshold, the SINR threshold, the RSRP range, the RSRQ range, the SINR range) is satisfied (e.g., when a measurement result of an RS belongs to a specific range, when the measurement result of the RS is equal to or less than a specific threshold, and/or when the measurement result of the RS is equal to or greater than a specific threshold), the terminal may determine transmission power by applying the power offset configured by the base station. The terminal may perform UL communication using the determined transmission power. The measurement result of the RS may be a measurement result of the RS received from the first TRP in FIG. 9, and the transmission power may be UL transmission power for each of the first TRP and the second TRP in FIG. 9.

A power offset (e.g., an additional offset) for transmission power according to an RSRP of a signal (e.g., an RS) received from sTRP (e.g., the first TRP of FIG. 9) may be defined as shown in Table 2 below. The power offset for the transmission power may vary according to the RSRP of the signal received from sTRP. The offset shown in Table 2 may be additionally applied to transmission power (e.g., *P_{PUSCH,b,f,c}*(*i, j, q_{d}, l*)) in a PUSCH occasion (e.g., a PUSCH transmission occasion *i*).

**[Table 2]**

| Index | RSRP (dBm) | Power offset (dB) |
|---|---|---|
| 0 | RSRP < -A | +a |
| 1 | -B ≤ RSRP < -C | +b |
| ... | ... | ... |
| 6 | -F ≤ RSRP < -G | -f |
| 7 | -G ≤ RSRP < -H | -g |

In Table 2, an RSRP threshold (e.g., an RSRP range) may be -A, -B, -C, ... , -F, -G, and/or -H. The base station may transmit, to the terminal through signaling, an RSRP threshold (e.g., an RSRP range) and a power offset (e.g., an additional offset) associated with the RSRP threshold. Alternatively, the base station may configure (e.g., indicate), to the terminal through signaling, index(es) of Table 2. In this case, Table 2 may be predefined in the technical specifications. In other words, Table 2 may be preconfigured in the base station and/or the terminal. For example, the base station may indicate (e.g., configure), to the terminal through signaling, [0,6] which are indexes of Table 2. In this case, the terminal may determine transmission power based on a power offset value +a corresponding to index 0 and/or a power offset value -f corresponding to index 6. A reference signal for RSRP measurement may be a reference signal received from a serving cell (e.g., the first TRP in FIG. 9). The reference signal may include a synchronization signal (e.g., SSB), a reference signal (e.g., CSI-RS) for channel state measurement, and the like. Alternatively, the base station may determine a power offset (e.g., an additional offset for transmission power) based on a measurement result of an uplink reference signal, and may inform, to the terminal, the power offset through signaling (e.g., RRC signaling). The terminal may receive the power offset from the base station through signaling, and may determine transmission power based on the power offset. For example, the terminal may determine UL transmission power for the first TRP of FIG. 9 without considering the power offset, and may determine UL transmission power for the second TRP of FIG. 9 by considering the power offset. For example, the UL transmission power for the first TRP may be determined based on Equation 1, and the UL transmission power for the second TRP may be determined based on Equation 2 or Equation 3. UL transmission powers for the TRPs may be independently configured.

The base station may transmit, to the terminal through signaling (e.g., RRC signaling), a single RSRP threshold (e.g., a single RSRP range) and a power offset (e.g., a single power offset) corresponding to the single RSRP threshold. The terminal may identify the single RSRP threshold and the power offset from the base station through signaling. When a condition associated with the single RSRP threshold is satisfied, the terminal may determine transmission power by applying the power offset corresponding to the single RSRP threshold.

### B. Proposal #1-2

Although signaling overhead for the above-described Proposal #1-1 may be small, since only a measurement result for a single TRP is considered in Proposal #1-1, a distance between a TRP performing UL communication and the terminal may not be considered. When multiple TRPs are not considered, communication performance and/or energy efficiency may decrease. In Proposal #1-2, the base station may configure a plurality of quality thresholds (e.g., a plurality of quality ranges), and may indicate (e.g., configure), to the terminal through signaling, the plurality of quality thresholds and power offsets (e.g., additional offsets, correction coefficients) associated with the plurality of quality thresholds.

The number of the plurality of quality thresholds may be configured to be the same as the number of TRPs targeted for channel measurement. For example, a first quality threshold may be configured for a first TRP, and a second quality threshold may be configured for a second TRP. When all quality thresholds configured by the base station are satisfied, the terminal may determine (e.g., configure, adjust, or control) transmission powers by applying the power offsets associated with the quality thresholds, and may perform UL communication using the transmission powers.

A power offset (e.g., an additional offset) for transmission power according to an RSRP of a signal (e.g., an RS) received from each of a plurality of TRPs may be defined as shown in Table 3 below. When the terminal supports up to two TRPs, power offsets associated with two RSRP thresholds may be configured.

**[Table 3]**

| Index | RSRP (dBm) | RSRP (dBm) | Power offset (dB) |
|---|---|---|---|
| 0 | RSRP < -A1 | RSRP <-A2 | +a |
| 1 | -B1 ≤ RSRP < -C1 | -B2 ≤ RSRP < -C2 | +b |
| ... | ... | ... | ... |
| 6 | -F1 ≤ RSRP < -G1 | -F2 ≤ RSRP < -G2 | -f |
| 7 | -G1 ≤ RSRP < -H1 | -G2 ≤ RSRP < -H2 | -g |

In Table 3, RSRP thresholds (e.g., RSRP ranges) may be -A1, -A2, -B1, -B2, -C1, - C2, ... , -F1, -F2, -G1, -G2, -H1, and/or -H2. -A1, -B1, -C1, ... , -F1, -G1, and/or -H1 may be RSRP thresholds (e.g., RSRP ranges) for the first TRP of FIG. 9. -A2, -B2, -C2, ... , -F2, -G2, and/or -H2 may be RSRP thresholds (e.g., RSRP ranges) for the second TRP of FIG. 9. An RSRP threshold for the first TRP may be referred to as RSRP threshold 1. An RSRP threshold for the second TRP may be referred to as RSRP threshold 2. The base station may use all or a part of Table 3. The base station may indicate (e.g., configure), to the terminal through signaling, index(es) corresponding to [RSRP threshold 1, RSRP threshold 2, power offset] used in Table 3. The terminal may identify the index(es) indicated through signaling from the base station. Table 3 may be predefined in the technical specifications. In other words, Table 3 may be preconfigured in the base station and/or the terminal, and the base station may inform, to the terminal, the index(es) corresponding to [RSRP threshold 1, RSRP threshold 2, power offset] used in Table 3.

Alternatively, the base station may transmit, to the terminal through signaling (e.g., RRC signaling), a quality threshold set and a power offset associated with the quality threshold set. The terminal may identify the quality threshold set and the power offset through signaling from the base station. The quality threshold set may include quality thresholds (e.g., RSRP thresholds) corresponding to each of a plurality of TRPs. The quality threshold set may include [RSRP threshold 1, RSRP threshold 2]. A power offset may be configured for each quality threshold set. A plurality of quality thresholds (e.g., -A1, -A2) associated with index 0 in Table 3 may be configured as one quality threshold set. The terminal may compare measurement results of reference signals received from a plurality of TRPs (e.g., the first TRP and the second TRP in FIG. 9) belonging to the same cell or different cells with the quality thresholds included in the quality threshold set.

For example, a quality threshold set may include two quality thresholds, and the terminal may receive reference signals from each of four TRPs. In this case, when one or more TRPs satisfying the corresponding quality thresholds exist, the terminal may determine transmission power by applying a power offset associated with the quality threshold(s), and may perform UL communication with the TRP(s) using the transmission power. When a plurality of TRP pairs exist, the terminal may identify TRP pair(s) satisfying quality threshold conditions at a time closest to a time at which UL transmission is triggered, and may perform UL communication with the identified TRP pair(s) using power offset(s) associated with the quality threshold(s).

Alternatively, when TRP pairs satisfying quality threshold conditions exist within a time duration in which UL transmission is performed, the terminal may determine transmission power using a power offset associated with the lowest quality threshold among the quality thresholds. The base station may transmit, to the terminal through signaling, information (e.g., a TRP ID) used to distinguish a TRP and information on a quality threshold (e.g., a quality range) corresponding to the TRP. The terminal may receive, through signaling from the base station, the information for distinguishing the TRP and the information on the quality threshold corresponding to the TRP. The terminal may distinguish TRP(s) measured by the terminal based on the information received from the base station, and may derive reception performance for each TRP.

### C. Proposal #1-3

In the above-described Proposal #1-1 and/or Proposal #1-2, the power offset may be used to determine transmission power of the terminal. According to a first method, the terminal may determine final transmission power by adding the power offset to transmission power for the PUSCH occasion *i* determined based on Equation 1. In other words, the final transmission power may be [transmission power based on Equation 1 + power offset]. Equation 1 may be an equation that does not consider an asymmetric TRP system. [Transmission power based on Equation 1 + power offset] may not exceed the maximum transmission power supported by the terminal. The terminal may perform UL communication using [transmission power based on Equation 1 + power offset]. In other words, the terminal may determine transmission power based on Equation 2 below. In Equation 2, *offset* may be a power offset determined in Proposal #1-1 and/or Proposal #1-2. In FIG. 9, UL transmission power for the first TRP may be determined based on Equation 1, and UL transmission power for the second TRP may be determined based on Equation 2. The UL transmission power for the second TRP may be a sum of the UL transmission power for the first TRP and the power offset. The power offset may have a negative value or a positive value. $\begin{matrix}{P}_{PUSCH , b , f , c} \left(i, j, {q}_{d}, l\right) = \\ min \left\{\begin{matrix}{P}_{CMAX , f , c} \left(i\right) \\ {P}_{O _ PUSCH , b , f , c} \left(j\right) + 10 {log}_{10} \left({2}^{μ}⋅{M}_{RB , b , f , c}^{PUSCH}\left(i\right)\right) + {α}_{b , f , c} \left(j\right) ⋅ {PL}_{b , f , c} \left({q}_{d}\right) + {Δ}_{TF , b , f , c} \left(i\right) + {f}_{b , f , c} \left(i, l\right) + offset\end{matrix}\right\} \\ \left[dBm\right]\end{matrix}$

According to a second method, a power offset determined in Proposal #1-1 and/or Proposal #1-2 may be used as a correction coefficient for a specific parameter. In other words, the power offset may be interpreted as a correction coefficient. The terminal may determine a corrected specific parameter by applying the correction coefficient to the specific parameter of Equation 1, and may determine transmission power using Equation 1 reflecting the corrected specific parameter. For example, in Equation 1, a correction coefficient *α_{b,f,c}*(*j*) indicating a scaling factor for path loss *α_{b,f,c}*(*j*) · *PL_{b,f,c}*(*q_{d}*) may have a value between 0 and 1. A value mapped to the power offset determined in Proposal #1-1 and/or Proposal #1-2 may be defined as *β*. *β* may be a correction coefficient for path loss (e.g., path loss for a DL channel between the first TRP and the terminal in FIG. 9). In Equation 1, *α_{b,f,c}*(*j*) · *PL_{b,f,c}*(*q_{d}*) may be replaced with *β* · *α_{b,f,c}*(*j*) · *PL_{b,f,c}*(*q_{d}*). In other words, the terminal may determine transmission power based on Equation 3 below. In FIG. 9, UL transmission power for the first TRP may be determined based on Equation 1, and UL transmission power for the second TRP may be determined based on Equation 3. $\begin{matrix}{P}_{PUSCH , b , f , c} \left(i, j, {q}_{d}, l\right) = \\ min \left\{\begin{matrix}{P}_{CMAX , f , c} \left(i\right) \\ {P}_{O _ PUSCH , b , f , c} \left(j\right) + 10 {log}_{10} \left({2}^{μ}⋅{M}_{RB , b , f , c}^{PUSCH}\left(i\right)\right) + β ⋅ {α}_{b , f , c} \left(j\right) ⋅ {PL}_{b , f , c} \left({q}_{d}\right) + {Δ}_{TF , b , f , c} \left(i\right) + {f}_{b , f , c} \left(i, l\right)\end{matrix}\right\} \\ \left[dBm\right]\end{matrix}$

### D. Proposal #1-4

In a procedure for transmitting configuration information for a TCI state pool, the base station may transmit, to the terminal, information on a path loss RS associated with each TCI state. The terminal may receive, from the base station, information on a path loss RS associated with each TCI state. In other words, the configuration information for the TCI state pool may include the information on the path loss RS associated with each TCI state. When an RS (e.g., a path loss RS) associated with a TCI state is updated, the base station may transmit, to the terminal, information on an updated RS using a MAC CE. The terminal may receive, from the base station, the information on the updated RS.

Alternatively, in a TCI state activation procedure using MAC CE, the base station may transmit, to the terminal, not only information on TCI state(s) to be activated but also information on a path loss RS associated with each TCI state. The terminal may receive, from the base station, the information on a path loss RS associated with each TCI state. In other words, MAC CE for TCI state activation may include information on TCI state(s) which are activation targets and information on a path loss RS associated with each TCI state. The terminal may determine transmission power using the path loss RS associated with the TCI state(s).

### 2. Proposal #2: Configuration/Indication of Additional Power Control through DCI and/or MAC CE

RRC signaling may transmit a large amount of information compared to other signaling schemes (e.g., DCI, MAC CE). Since RRC signaling involves long latency, it may not be easy to transmit dynamic information through RRC signaling. Although an amount of information transmittable by DCI may be small, since DCI signaling may require only a PDCCH decoding procedure without scheduling, DCI signaling may be advantageous over other signaling (e.g., RRC signaling, MAC CE) in terms of latency. DCI signaling may be used for transmission of dynamic information. Since scheduling is required for MAC CE signaling, MAC CE signaling may be disadvantageous compared to DCI signaling in terms of latency. The amount of information transmittable by MAC CE may be greater than that transmittable by DCI. In Proposal #2, methods for controlling transmission power of a PUSCH using DCI and/or MAC CE in an asymmetric TRP system are described.

For UL communication (e.g., PUSCH transmission), DCI format 0_X may be used, and for DL communication (e.g., PDSCH transmission), DCI format 1_X may be used. DCI format 2_X may correspond to common DCI. DCI format 3_X may be used for sidelink (SL) communication. DCI format 4_X may be used for multicast/broadcast communication. X may be an integer equal to or greater than 0.

DCI format 0_3 may be used for scheduling of a plurality of PUSCH transmissions for a plurality of cells. DCI format 0_3 may include resource allocation information, decoding-related information, and/or power control information corresponding to the number of PUSCH transmissions (e.g., the number of cells corresponding to the PUSCH transmissions). The resource allocation information, the decoding-related information, and/or the power control information may be dynamically configured by DCI format 0_3. Information on a path loss RS required for power control for RBs allocated for PUSCH transmission may be transmitted, to the terminal, through RRC signaling of the base station. The terminal may determine uplink transmission power for each cell based on the path loss RS indicated by the base station.

In an asymmetric TRP system, the terminal may perform DL communication with one TRP, and the terminal may perform UL communication with a plurality of TRPs. In this case, it may be difficult to individually indicate (e.g., configure) a reference signal (e.g., a path loss RS) for a PUSCH resource corresponding to each cell (e.g., each TRP). Accordingly, a new DCI format and/or a new radio network temporary identifier (RNTI) for the asymmetric TRP system may be required. Alternatively, for the asymmetric TRP system, an existing DCI format for scheduling across a plurality of TRPs may be reused.

In the present disclosure, a TRP transmitting a DL signal to a terminal may be defined as a primary serving cell (PSC), and a TRP (e.g., a target TRP) receiving a UL signal from the terminal may be defined as a secondary serving cell (SSC). In FIG. 9, the first TRP may be a PSC, and the first TRP and/or the second TRP in FIG. 9 may be SSCs. In the asymmetric TRP system, among parameters used for determining transmission power of UL transmission (e.g., PUSCH transmission) for an SSC, path loss may be determined based on an RS received from a PSC. Accordingly, the base station may transmit, to the terminal, a power offset for each TRP (e.g., each SSC) using DCI and/or MAC CE. The terminal may obtain the power offset for each TRP from the base station.

In relation to the correction coefficient *α_{b,f,c}*(*j*) for path loss configured by RRC signaling, in order for the correction coefficient *α_{b,f,c}*(*j*) to be independently applied to each TRP, the PSC may transmit, to the terminal, correction coefficient values corresponding to the number of SSCs. The terminal may obtain the correction coefficient values from the PSC. In other words, since the correction coefficient *α_{b,f,c}*(*j*) configured by RRC signaling is a value for the PSC, correction coefficient(s) for SSC(s) may be additionally configured (e.g., indicated) for the terminal. The correction coefficient *α*_{*b*,*f*,*c*}(*j*) for path loss may have a value between 0 and 1. Due to quantization constraints, it may be difficult to transmit quantized bits corresponding to the correction coefficient *α_{b,f,c}*(*j*) through DCI. The correction coefficient *α_{b,f,c}*(*j*) may be interpreted as the power offset in the above-described Proposal #1. The correction coefficient may be determined based on the power offset.

Considering characteristics of the asymmetric TRP system, additional correction coefficient(s) for SSC(s) may be introduced in addition to the correction coefficient *α_{b,f,c}*(*j*) for the PSC configured by RRC signaling. In order to transmit the additional correction coefficient(s) through DCI and/or MAC CE, the additional correction coefficient(s) may have an appropriate quantization level. The base station may transmit, to the terminal, DCI and/or MAC CE including UL scheduling information for each SSC and/or power control information (e.g., an additional correction coefficient) for each SSC. The terminal may receive the DCI and/or the MAC CE from the base station, and may identify the UL scheduling information for each SSC and/or the power control information (e.g., the additional correction coefficient) for each SSC included in the DCI and/or the MAC CE.

In order to support the above-described operation, in a UE capability reporting procedure, the terminal may inform the base station whether the terminal supports determining transmission power based on the additional correction coefficient for each SSC. When power control information (e.g., the additional correction coefficient) for each SSC is transmitted through single DCI and/or single MAC CE, scheduling information (e.g., decoding information) and/or power control information for each SSC may be included in the single DCI and/or the single MAC CE according to a mapping order of CORESET indexes associated with TRPs (e.g., SSCs).

Alternatively, the base station may transmit, to the terminal through RRC signaling, candidate correction coefficient pools usable for each SSC, may indicate, to the terminal through MAC CE signaling, activation (or deactivation) of one or more correction coefficient pools among the candidate correction coefficient pools, and may indicate, to the terminal through DCI signaling, a codepoint indicating one or more correction coefficients within the activated correction coefficient pool(s). The terminal may identify the one or more correction coefficients (e.g., additional correction coefficient(s)) based on RRC signaling, MAC CE signaling, and/or DCI signaling of the base station. A single codepoint may be associated with additional correction coefficients for a maximum supported number of SSCs.

The number of bits of a field indicating a correction coefficient (e.g., a candidate correction coefficient) for path loss for each SSC may vary according to a quantization level of the correction coefficient. For example, when the number of transmittable candidate correction coefficients for each SSC is N, the number of bits of a field indicating the candidate correction coefficient within DCI and/or MAC CE may be ${log}_{2} \left⌈N\right⌉$. N may be a natural number. When the maximum number of TRPs performing UL communication with the terminal is M, the number of bits of the field indicating candidate correction coefficients within DCI and/or MAC CE may be $M ⋅ {log}_{2} \left⌈N\right⌉$. M may be a natural number. The base station and/or the terminal may identify the size of the field indicating the candidate correction coefficients within the DCI and/or the MAC CE based on a value of N and/or M.

The base station may transmit, to the terminal, information on whether UL power control (e.g., UL transmission power) is applied differently for each SSC using RRC signaling and/or MAC CE signaling. The terminal may receive the information through the RRC signaling and/or the MAC CE signaling from the base station. When UL power control (e.g., UL transmission power) is independently applied to each SSC, the terminal may independently determine UL transmission power for each SSC. For example, the terminal may determine UL transmission power for a first SSC (e.g., the first TRP of FIG. 9) based on Equation 1, and the terminal may determine UL transmission power of a second SSC (e.g., the second TRP of FIG. 9) based on Equation 2 or Equation 3. Whether UL power control is applied independently to each SSC may be determined based on UE capability. The base station may determine whether UL power control is applied differently for each SSC based on the UE capability. When UL power control is indicated as being applied differently for each SSC (or when UL power control is indicated as being applied equally to SSCs), the indication may be valid until additional signaling. Alternatively, the indication may be valid during a specific duration indicated by the base station. In this case, flexibility of power control may be improved.

The base station may generate DCI including a field indicating the number M of TRPs performing UL communication with the terminal, and may transmit the DCI to the terminal. The terminal may receive the DCI from the base station, and may identify the number of TRPs performing UL communication with the terminal based on the field included in the DCI. The size of the field indicating the number M of TRPs performing UL communication with the terminal may be ${log}_{2} \left⌈M\right⌉$. Based on the number of TRPs performing UL communication with the terminal indicated by the field included in the DCI, the terminal may predict how many correction coefficient values for SSCs are included in the DCI, and may expect to decode the correction coefficients for the SSCs based on the predicted information. Bits corresponding to M SSCs supported by the terminal may be allocated within the DCI, and each of the bits may indicate whether path loss is corrected for each SSC (e.g., each TRP).

A correction coefficient (e.g., a correction coefficient of path loss) for an SSC may be delivered through MAC CE. When the number M of SSCs frequently changes, overhead for blind decoding of the terminal may increase. Accordingly, the number M of SSCs may be delivered through MAC CE.

The base station may indicate, to the terminal through MAC CE, whether UL power control for each SSC is supported or activation or deactivation of UL power control for each SSC. The terminal may identify the information indicated by the MAC CE transmitted by the base station. The number of SSCs associated with the information indicated by the MAC CE may correspond to the number of PUSCH scheduling information entries indicated by DCI after the MAC CE. The base station may inform the terminal in advance that UL power control for all SSCs or some SSCs is performed. The size of a field indicating the information within the MAC CE may be the same as or similar to ${log}_{2} \left⌈M\right⌉$. M may be the number of SSCs.

When activation of UL power control for specific SSC(s) is indicated, the terminal may determine UL power (e.g., transmission power) for the specific SSC(s) based on a correction coefficient (or a power offset) of path loss until deactivation of the UL power control for the specific SSC(s) is indicated, and may perform UL communication with the specific SSC(s) using the determined UL power. A method of applying a correction coefficient transmitted through DCI and/or MAC CE may be the same as or similar to Proposal #1-3.

In the present disclosure, the maximum number of TRPs may be interpreted as the maximum number of UL TCI states supported by the terminal. In other words, the maximum number of TRPs may be independent of a TCI state type. When two TRPs are supported and the TCI state type is the separate type, four TCI states are configured for the terminal, but since the maximum number of UL TCI states supported by the terminal is two, the maximum number of TRPs may be two. The maximum number of TRPs (e.g., the maximum number of UL TCI states) may be interpreted as the maximum TRP number M associated with information transmitted through DCI and/or MAC CE. Field(s) within the DCI and/or the MAC CE may be associated with TCI state(s) in descending order.

The terminal may determine (e.g., configure, adjust, or control) UL transmission power based on one proposal or a combination of proposals selected from Proposal #1 or Proposal #2 proposed in the present disclosure. The exemplary embodiments proposed in the present disclosure may be applied not only to power control for UL-SCH (e.g., PUSCH) transmission but also to transmission power control for another uplink signal/channel (e.g., SRS, PUCCH) for an activated serving cell.

The terminal may transmit, to the base station, information indicating whether function(s) proposed in the present disclosure are supported. For example, in a UE capability reporting procedure, the terminal may transmit, to the base station, information indicating whether the function(s) proposed in the present disclosure are supported. The base station may identify the function(s) supported by the terminal based on the information received from the terminal. The base station may perform signaling and operations based on the function(s) supported by the terminal (e.g., UE capability). The base station may transmit, to the terminal through RRC signaling, information indicating whether to use proposal(s) disclosed in the present disclosure. The terminal may identify the proposal(s) used based on the RRC signaling received from the base station.

The operations of the method according to the exemplary embodiment of the present disclosure can be implemented as a computer readable program or code in a computer readable recording medium. The computer readable recording medium may include all kinds of recording apparatus for storing data which can be read by a computer system. Furthermore, the computer readable recording medium may store and execute programs or codes which can be distributed in computer systems connected through a network and read through computers in a distributed manner.

The computer readable recording medium may include a hardware apparatus which is specifically configured to store and execute a program command, such as a ROM, RAM or flash memory. The program command may include not only machine language codes created by a compiler, but also high-level language codes which can be executed by a computer using an interpreter.

Although some aspects of the present disclosure have been described in the context of the apparatus, the aspects may indicate the corresponding descriptions according to the method, and the blocks or apparatus may correspond to the steps of the method or the features of the steps. Similarly, the aspects described in the context of the method may be expressed as the features of the corresponding blocks or items or the corresponding apparatus. Some or all of the steps of the method may be executed by (or using) a hardware apparatus such as a microprocessor, a programmable computer or an electronic circuit. In some embodiments, one or more of the most important steps of the method may be executed by such an apparatus.

In some exemplary embodiments, a programmable logic device such as a field-programmable gate array may be used to perform some or all of functions of the methods described herein. In some exemplary embodiments, the field-programmable gate array may be operated with a microprocessor to perform one of the methods described herein. In general, the methods are preferably performed by a certain hardware device.

The description of the disclosure is merely exemplary in nature and, thus, variations that do not depart from the substance of the disclosure are intended to be within the scope of the disclosure. Such variations are not to be regarded as a departure from the spirit and scope of the disclosure. Thus, it will be understood by those of ordinary skill in the art that various changes in form and details may be made without departing from the spirit and scope as defined by the following claims.

## Claims

1. A method of a user equipment (UE), the method comprising:
performing downlink (DL) communication with a first transmission and reception point (TRP);
determining a first uplink (UL) transmission power for first UL communication with the first TRP based on a channel state of a DL channel between the UE and the first TRP;
performing the first UL communication with the first TRP using the first UL transmission power;
determining a second UL transmission power for second UL communication with a second TRP based on a power offset and the channel state of the DL channel between the UE and the first TRP; and
performing the second UL communication with the second TRP using the second UL transmission power.

2. The method of claim 1, wherein the determining of the second UL transmission power comprises:
measuring a quality of the DL channel based on a reference signal received through the DL channel;
identifying a quality range to which the measured quality belongs; and
identifying the power offset mapped to the quality range.

3. The method of claim 2, further comprising: receiving mapping information between one or more quality ranges and one or more power offsets,
wherein the quality range and the power offset are identified based on the mapping information.

4. The method of claim 3, wherein the mapping information is received through radio resource control (RRC) signaling from the first TRP.

5. The method of claim 2, wherein the measured quality is a reference signal received power (RSRP), and the quality range is an RSRP range or an RSRP threshold.

6. The method of claim 1, wherein the second UL transmission power is a sum of the first UL transmission power and the power offset.

7. The method of claim 1, wherein the determining of the second UL transmission power comprises:
determining a correction coefficient for path loss of the DL channel based on the power offset; and
determining the second UL transmission power based on the path loss reflecting the correction coefficient.

8. The method of claim 1, further comprising: receiving, from the first TRP, a medium access control (MAC) control element (CE) or downlink control information (DCI) including a correction coefficient corresponding to the power offset,
wherein the second UL transmission power is determined based on path loss reflecting the correction coefficient.

9. The method of claim 8, further comprising: receiving, from the first TRP, RRC signaling including a plurality of correction coefficients,
wherein the correction coefficient indicated by the MAC CE or the DCI is one correction coefficient among the plurality of correction coefficients indicated by the RRC signaling.

10. The method of claim 1, further comprising: receiving, from the first TRP, information indicating that UL transmission power is independently applied to each TRP,
wherein, based on UL transmission power being indicated as independently applied to each TRP, the first UL transmission power and the second UL transmission power are independently determined.

11. A user equipment (UE) comprising at least one processor, wherein the at least one processor causes the UE to perform:
performing downlink (DL) communication with a first transmission and reception point (TRP);
determining a first uplink (UL) transmission power for first UL communication with the first TRP based on a channel state of a DL channel between the UE and the first TRP;
performing the first UL communication with the first TRP using the first UL transmission power;
determining a second UL transmission power for second UL communication with a second TRP based on a power offset and the channel state of the DL channel between the UE and the first TRP; and
performing the second UL communication with the second TRP using the second UL transmission power.

12. The UE of claim 11, wherein in the determining of the second UL transmission power, the at least one processor causes the UE to perform:
measuring a quality of the DL channel based on a reference signal received through the DL channel;
identifying a quality range to which the measured quality belongs; and
identifying the power offset mapped to the quality range.

13. The UE of claim 12, wherein the at least one processor further causes the UE to perform: receiving mapping information between one or more quality ranges and one or more power offsets,
wherein the quality range and the power offset are identified based on the mapping information.

14. The UE of claim 13, wherein the mapping information is received through radio resource control (RRC) signaling from the first TRP.

15. The UE of claim 12, wherein the measured quality is a reference signal received power (RSRP), and the quality range is an RSRP range or an RSRP threshold.

16. The UE of claim 11, wherein the second UL transmission power is a sum of the first UL transmission power and the power offset.

17. The UE of claim 11, wherein in the determining of the second UL transmission power, the at least one processor causes the UE to perform:
determining a correction coefficient for path loss of the DL channel based on the power offset; and
determining the second UL transmission power based on the path loss reflecting the correction coefficient.

18. The UE of claim 11, wherein the at least one processor further causes the UE to perform: receiving, from the first TRP, a medium access control (MAC) control element (CE) or downlink control information (DCI) including a correction coefficient corresponding to the power offset,
wherein the second UL transmission power is determined based on path loss reflecting the correction coefficient.

19. The UE of claim 18, wherein the at least one processor further causes the UE to perform: receiving, from the first TRP, RRC signaling including a plurality of correction coefficients,
wherein the correction coefficient indicated by the MAC CE or the DCI is one correction coefficient among the plurality of correction coefficients indicated by the RRC signaling.

20. The UE of claim 11, wherein the at least one processor further causes the UE to perform: receiving, from the first TRP, information indicating that UL transmission power is independently applied to each TRP,
wherein, based on UL transmission power being indicated as independently applied to each TRP, the first UL transmission power and the second UL transmission power are independently determined.
